(19) Europäisches Patentamt

European Patent Office

Office européen des brevets

(11) **EP 4 692 574 A1**

(12) **EUROPEAN PATENT APPLICATION**
published in accordance with Art. 153(4) EPC

(43) Date of publication:
**11.02.2026 Bulletin 2026/07**

(21) Application number: **23931193.9**

(22) Date of filing: **10.11.2023**

(51) International Patent Classification (IPC):
*F16B 37/00* (2006.01)

(52) Cooperative Patent Classification (CPC):
**F16B 37/00**

(86) International application number:
**PCT/JP2023/040631**

(87) International publication number:
**WO 2024/209731 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.04.2023 PCT/JP2023/013971**

(71) Applicants:
• **Matsuo Industry Corporations
Tokyo 143-0015 (JP)**
• **iMott Inc.
Yokohama-shi, Kanagawa 225-0012 (JP)**

(72) Inventors:
• **HAYASHIDA, Tatsuaki
Yokohama-shi, Kanagawa 224-0014 (JP)**
• **MATSUO, Makoto
Tokyo 143-0015 (JP)**

(74) Representative: **Vossius & Partner
Patentanwälte Rechtsanwälte mbB
Siebertstrasse 3
81675 München (DE)**

(54) **FASTENING NUT**

(57) Provided is a nut which extends the fatigue life of a bolt in bolt-nut fastening and which is easy to produce. A nut (1) includes a nut body (2) with a flange part (5) and a shallow depression (7) with a depth of less than 1.5 pitches on the axial side of a bearing surface (5s), which is a flat surface extending perpendicular to an axis on the fastening side of the nut body (2). This nut (1) preferably has an additional rigidity part (6) on the release side.

Fig. 1 (a)

EP 4 692 574 A1

**Description**

FIELD

The present disclosure relates to a nut used in bolt/nut fastening which performs normal fastening, wherein the nut reduces the load on the first fastening meshing thread.

BACKGROUND

Bolts and nuts are often used to fasten various structures, and bolts and nuts are commonly used in aircraft, automobiles, railroad cars, machine tools, civil engineering machines, agricultural machines, various production equipment, bridges, architectural structures, etc. However, in fastenings by means of bolt and nut, there have been many cases in which the bolt breaks at the first meshing thread due to fatigue, and it has been indicated that the cause of this is crack axis breakage at the first fastening meshing thread of the bolt in use, and in particular, near the thread valley. When a bolt breaks, the fastening itself disengages, and the magnitude of the impact is also an issue.

In conventional threaded fastenings, since repeated external loads are applied during use in addition to the initial fastening load, the fatigue fracture strength is lowest at the thread valley of the first meshing thread of the bolt, where the cross-sectional area is the smallest and the load distribution is the largest. It is known that many cracks and axial fractures occur at this location.

Many ideas have been proposed for the nut side to improve the fatigue fracture life at the thread valley part of the first meshing thread of the bolt, but they are all just ideas, each with their own advantages and disadvantages, and none have been put to practical use on nuts, which are general-purpose mass-produced parts.

A representative proposal is to form a notch (recess) on the threaded hole side of the bearing surface (fastening surface) of a hexagonal nut to reduce the load on the thread valley part of the first meshing thread of the bolt (for example, Patent Literature 1). Patent Literature 1 describes that, based on the JIS standard hexagonal nut, the width (diameter) of the notch is approximately 1.3-fold the bolt diameter, and the depth of the notch is approximately 1.5 to 2-fold the thread pitch for fine threads. Furthermore, FIG. 2(a) of Patent Literature 2 also discloses a hexagonal nut with a notch formed on the threaded hole side of the bearing surface of the nut, in the same manner as Patent Literature 1.

However, in the hexagonal nut shapes of Patent Literature 1 and 2, since the area of the bearing surface is reduced by the amount of the notch formed, at a fastening force lower than the fastening force required for fastening, the narrow bearing surface portion of the nut sinks into the object to be fastened, and the nut cannot be fastened any further, making it impossible to obtain the desired fastening force. Alternatively, there is a risk that the notched, narrow bearing surface portion will buckle and break during or after fastening. Thus, the hexagonal nut of Patent Literature 1 has low practicality and has not actually been put to practical use.

Also disclosed are nuts in which expanding legs are provided on the bearing surface side of the hexagonal nut and deep cuts or convex spaces are formed on the threaded hole side (for example, Patent Literature 3 and 4). Patent Literature 3 and 4 propose that by forming deep cuts or convex spaces, the rigidity of the screw shaft portion present on the inner side is reduced and flexibility is imparted, thereby reducing the burden on the thread valley part near the first meshing thread.

However, in nuts such as those in Patent Literature 3 and 4, the depth of the cuts and convex spaces is deep, such as 7 or more thread pitches or 4 or more thread pitches, and when trying to commercially produce and process nuts, due to the deep and complex shapes of the cuts and convex spaces and because the nuts are small parts, it is necessary to use small and complex forging dies or cutting tools, which have a short life span, resulting in significantly poor producibility and productivity, and making them unsuitable for commercial production of nuts, which are general-purpose parts. The same producibility and processability problems exist for the hexagonal nuts in Patent Literature 1, because the depth of the cuts is large.

Patent Literature 5 discloses a flange nut having a bearing surface that is inclined in a direction perpendicular to the axis and an annular groove that is deeper than the bearing surface. However, this nut has a structure and principle in which, when the nut is fastened, since the inclined bearing surface of the nut deforms so as to be perpendicular to the axis, the threads of the nut deform so that they move away from the threads of the bolt, thereby reducing the load on the first thread of the mating thread of the bolt nut, which is completely different in both the nut structure and the principle of reducing the load on the first meshing thread from the nut disclosed herein, which has a bearing surface and depression that are flat surfaces perpendicular to the axis.

Patent Literature 6 discloses a suspension nut having a threaded portion and a hollow portion extending from the threaded portion to the free end surface, the bore diameter of which is larger than the valley diameter of the threaded portion. However, this nut has no notch or recess in the bearing surface of the nut, and is not related to reducing the load on the bolt thread valley at the first thread. The uses of the nut are also extremely limited due to its structure. Furthermore, since the length of the hollow portion from the threaded portion to the free end surface of the bolt is usually set so as to be 3-fold or more longer than the nut pitch, the structure of the release side additional rigidity part of the nut disclosed herein (2-fold or less than the thread pitch) is not disclosed.

[CITATION LIST]

[PATENT LITERATURE]

[PTL 1] Japanese Utility Model Registration Application No. 57-142522 (Japanese Unexamined Utility Model Publication (Kokai) No. 59-45320)
[PTL 2] Japanese Unexamined Patent Publication (Kokai) No. 57-177922
[PTL 3] U.S. Patent Application Publication No. 2016/0123161
[PTL 4] WO 2019/131685
[PTL 5] U.S. Patent No. 5,927,921
[PTL 6] Japanese Unexamined Utility Model Publication (Kokai) No. 61-37004

SUMMARY

[TECHNICAL PROBLEM]

In view of the above problems, the present disclosure aims to provide a nut which reduces the load on the bolt thread valley at the first fastening engagement and which has a simple structure and is easy to produce.

[SOLUTION TO PROBLEM]

In order to solve the above problems, the present disclosure provides a nut having the following aspects.

(Aspect 1)

A nut (1), comprising a nut body (2) and a threaded hole (3), wherein

the nut (1) has an axis, an axial direction (Z), and a radial direction (X) perpendicular to the axis,
in the radial direction (X) of the nut body (2), an axial side is referred to as the "inner side", and the side distant from the axis is referred to as the "outer side" or "outer peripheral side",
hereinafter, the dimension from the axis of the nut body (2) to a specific position in the radial direction (X) is defined as the "radial dimension", which is distinguished from the "radial direction dimension", which is the dimension between two specific points in the radial direction (X),
the threaded hole (3) has a thread valley radial dimension $R0$, which is the radial dimension of a thread valley cylindrical surface (3e) formed by connecting thread valleys (3b) of the threaded hole (3), and a thread pitch $P$,
the nut body (2) includes a gonal nut part (an angular nut part) (4) and a flange part (5) in the axial direction (Z), the flange part (5) side of the nut (1) is defined as the "fastening side" and the gonal nut part (4) side is the "release side",
the gonal nut part (4) has an outer perimeter inscribed cylindrical radial dimension $Rn$ of the gonal nut part (4), which is the radial dimension of the cylindrical surface (4) inscribed on an outer perimeter surface of the gonal nut part (4), and an outer perimeter circumscribed cylindrical radial dimension $Rno$ of the gonal nut part (4), which is the radial dimension of the cylindrical surface circumscribed on the outer perimeter surface of the gonal nut part (4),
the flange (5) part has an outer perimeter radial dimension that is larger than the outer perimeter circumscribed cylindrical radial dimension $Rno$,
the flange part (5) has a bearing surface (5s) consisting of a plane extending in a direction (X) perpendicular to the axis at the fastening side end,
the flange part (5) includes a depression (7) on the axial side of the bearing surface (5s), which is annular when viewed in the axial direction (Z) and which has a depth toward the release side from an extension surface (5e) of the bearing surface, and
the depression (7) has a maximum depth $Dm$ from the extension surface (5e) of the bearing surface in the axial direction (Z) that is less than 1.5-fold the thread pitch $P$ ($Dm<1.5P$), preferably 1.25-fold or less ($Dm\leq1.25P$), and more preferably 1.0-fold or less ($Dm\leq1.0P$) or less than 1.0-fold ($Dm<1.0P$).

(Aspect 2)

A nut (1), comprising a nut body (2) and a threaded hole (3), wherein

the nut (1) has an axis, an axial direction (Z), and a radial direction (X) perpendicular to the axis,
an axial side of the nut body (2) in the radial direction (X) is referred to as the "inner side", and the side distant from the axis is referred to as the "outer side" or "outer peripheral side",
hereinafter, the dimension from the axis of the nut body (2) to a specific position in the radial direction (X) is defined as the "radial dimension", which is distinguished from the "radial direction dimension", which is the dimension between two specific points in the radial direction (X),
the threaded hole (3) has a thread valley radial dimension R0, which is the radial dimension of a thread valley cylindrical surface (3e) formed by connecting thread valleys (3b) of the threaded hole (3), and a thread pitch P,
the nut body (2) includes a gonal nut part (4) and a flange part (5) in the axial direction (Z), the flange part (5) side of the nut (1) is defined as the "fastening side" and the gonal nut part (4) side is the "release side",
the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),
the flange part (5) has an outer perimeter radial dimension that is larger than the outer perimeter circumscribed cylindrical radial dimension Rno,
the flange part (5) has a bearing surface (5s) consisting of a plane extending in a direction (X) perpendicular to the axis at the fastening side end,
the flange part (5) includes a depression (7) on the axial side of the bearing surface (5s), which is annular when viewed in the axial direction (Z) and which has a depth toward the release side from an extension surface (5e) of the bearing surface,
an area Sm (=S3-S2) obtained by subtracting an area S2 of the axial side having an axial side end (5si) of the bearing surface as its outer edge from an area S3 of the axial side having the flange outermost perimeter part (5om) of the flange part (5) as its outer edge as viewed from the axial direction (Z) is 0.55-fold or more (S≥0.55Ss) of an area Ss (=Sn-S0) obtained by subtracting an area S0 of a circle having the radius of the thread valley radial dimension R0 from an area Sn of a circle having the radius of the outer perimeter inscribed cylindrical radial dimension Rn of the gonal nut part (4), and
in the depression (7), a maximum depth Dm in the axial direction (Z) from the extension surface (5e) of the bearing surface is less than 1.5-fold the thread pitch P (Dm<1.5P).

(Aspect 3)

A nut (1), comprising a nut body (2) and a threaded hole (3), wherein

the nut (1) has an axis, an axial direction (Z), and a radial direction (X) perpendicular to the axis,
an axial side of the nut body (2) in the radial direction (X) is referred to as the "inner side", and the side distant from the axis is referred to as the "outer side" or "outer peripheral side",
hereinafter, the dimension from the axis of the nut body (2) to a specific position in the radial direction (X) is defined as the "radial dimension", which is distinguished from the "radial direction dimension", which is the dimension between two specific points in the radial direction (X),
the threaded hole (3) has a thread valley radial dimension R0, which is the radial dimension of a thread valley cylindrical surface (3e) formed by connecting thread valleys (3b) of the threaded hole (3), and a thread pitch P,
wherein the thread pitch P is a thread pitch based on the JIS standard for threads or the standard of each country or international organization corresponding to the JIS standard (hereinafter, JIS and the like are collectively referred to as "standards"),
the nut body (2) includes a gonal nut part (4) and a flange part (5) in the axial direction (Z), the flange part (5) side of the nut (1) is defined as the "fastening side" and the gonal nut part (4) side is the "release side",
the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),
the flange part (5) has an outer perimeter radial dimension that is larger than the outer perimeter circumscribed cylindrical radial dimension Rno,
the flange part has a bearing surface (5s) consisting of a plane extending in a direction (X) perpendicular to the axis at the fastening side end,

the flange part (5) includes a depression (7) on the axial side of the bearing surface (5s), which is annular when viewed in the axial direction (Z) and which has a depth toward the release side from an extension surface (5e) of the bearing surface, and

in the depression (7), a maximum depth Dm in the axial direction (Z) from the extension surface (5e) of the bearing surface is less than 1.5-fold the thread pitch P (Dm<1.5P).

(Aspect 4)

A nut (1), comprising a nut body (2) and a threaded hole (3), wherein

the nut has an axis, an axial direction (Z), and a radial direction (X) perpendicular to the axis,

an axial side of the nut body (2) in the radial direction (X) is referred to as the "inner side", and the side distant from the axis is referred to as the "outer side" or "outer peripheral side",

hereinafter, the dimension from the axis of the nut body (2) to a specific position in the radial direction (X) is defined as the "radial dimension", which is distinguished from the "radial direction dimension", which is the dimension between two specific points in the radial direction (X),

the threaded hole (3) has a thread valley radial dimension R0, which is the radial dimension of a thread valley cylindrical surface (3e) formed by connecting thread valleys (3b) of the threaded hole (3), and a thread pitch P,

wherein the thread pitch P is a thread pitch based on the JIS standard for threads or the standard of each country or international organization corresponding to the JIS standard (hereinafter, JIS and the like are collectively referred to as "standards"),

the nut body (2) includes a gonal nut part (4) and a flange part (5) in the axial direction (Z), the flange part (5) side of the nut (1) is defined as the "fastening side" and the gonal nut part (4) side is the "release side",

the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),

the flange part (5) has an outer perimeter radial dimension that is larger than the outer perimeter circumscribed cylindrical radial dimension Rno,

the flange part (5) has a bearing surface (5s) consisting of a plane extending in a direction (X) perpendicular to the axis at the fastening side end,

the flange part (5) includes a depression (7) on the axial side of the bearing surface (5s), which is annular when viewed in the axial direction (Z) and which has a depth toward the release side from an extension surface (5e) of the bearing surface, and

in the depression (7), when the thread pitch P of the threaded hole (3) is a thread pitch of a fine thread as defined in the standards, a maximum depth Dm in the axial direction from the extension surface (5e) of the bearing surface is less than 1.5-fold the thread pitch P (Dm<1.5P), and when the thread pitch P of the threaded hole is a thread pitch of a coarse thread as defined in the standards, the maximum depth Dm in the axial direction (Z) from the extension surface (5e) of the bearing surface is less than 1.0-fold the thread pitch P (Dm<1.0P).

(Aspect 5)

A nut (1), comprising a nut body (2) and a threaded hole (3), wherein

the nut has an axis, an axial direction (Z), and a radial direction (X) perpendicular to the axis,

an axial side of the nut body (2) in the radial direction (X) is referred to as the "inner side", and the side distant from the axis is referred to as the "outer side" or "outer peripheral side",

hereinafter, the dimension from the axis of the nut body (2) to a specific position in the radial direction (X) is defined as the "radial dimension", which is distinguished from the "radial direction dimension", which is the dimension between two specific points in the radial direction (X),

the threaded hole (3) has a thread valley radial dimension R0, which is the radial dimension of a thread valley cylindrical surface (3e) formed by connecting thread valleys (3b) of the threaded hole (3), a female thread valley diameter φ in the diameter of the thread valley cylindrical surface (3e), and a thread pitch P,

wherein the thread pitch is defined as P (unit: mm), a valley diameter of female threading of the nut is defined as φ (unit: mm), and the following relationships are satisfied:

when $0.5 < \varphi \leq 1.3$, $P \leq (1/20)\varphi + 0.17$,

when $1.3 < \varphi \leq 2.3$, $P \leq (0.12/0.8)\varphi + 0.07$,

when $2.3 < \varphi \leq 6.5$, $P \leq (0.6/4)\varphi + 0.02$,

when 6.5<φ≤12, P≤(0.55/4)φ-0.07,
when 12<φ≤41, P≤(2.55/29)φ+0.48,
when 41<φ≤125, P≤(2/85)φ+3.06,
when 125<φ≤320, P≤7.80
or
the relationships shown in the Table below are satisfied:

[Table]

| Female thread valley diameter φ | Range of P |
|---|---|
| φ≤1.3 | 0.24 or less |
| 1.3<φ≤1.5 | 0.28 or less |
| 1.5<φ≤1.9 | 0.33 or less |
| 1.9<φ≤2.1 | 0.38 or less |
| 2.1<φ≤2.7 | 0.43 or less |
| 2.7<φ≤3.2 | 0.48 or less |
| 3.2<φ≤3.7 | 0.58 or less |
| 3.7<φ≤4.2 | 0.68 or less |
| 4.2<φ≤4.7 | 0.73 or less |
| 4.7<φ≤5.5 | 0.78 or less |
| 5.5<φ≤7.5 | 0.98 or less |
| 7.5<φ≤9.5 | 1.20 or less |
| 9.5<φ≤11.5 | 1.40 or less |
| 11.5<φ≤13 | 1.70 or less |
| 13<φ≤17 | 1.90 or less |
| 17<φ≤23 | 2.40 or less |
| 23<φ≤29 | 2.80 or less |
| 29<φ≤35 | 3.30 or less |
| 35<φ≤40 | 3.80 or less |
| 41<φ≤45 | 4.30 or less |
| 45<φ≤55 | 4.80 or less |
| 55<φ≤62 | 5.30 or less |
| 62<φ≤122 | 5.80 or less |
| 122<φ≤310 | 7.80 or less |

the nut body (2) includes a gonal nut part (4) and a flange part (5) in the axial direction (Z), the flange part (5) side of the nut (1) is defined as the "fastening side" and the gonal nut part (4) side is the "release side",

the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),

the flange part (5) has an outer perimeter radial dimension that is larger than the outer perimeter circumscribed cylindrical radial dimension Rno,

the flange part (5) has a bearing surface (5s) consisting of a plane extending in a direction (X) perpendicular to the axis at the fastening side end,

the flange part (5) includes a depression (7) on the axial side of the bearing surface (5s), which is annular when viewed in the axial direction (Z) and which has a depth toward the release side from an extension surface (5e) of the bearing surface, and

in the depression, a maximum depth Dm in the axial direction (Z) from the extension surface (5e) of the bearing surface is less than 1.5-fold the thread pitch P (Dm<1.5P).

(Aspects 2 to 5)

Though Aspects 2 to 5 each have additional features as compared to Aspect 1, Aspects 2 to 5 may satisfy the additional features of Aspect 1 and one or more of Aspects 2 to 5.

(Aspect 6)

The nut (1) according to any one of Aspects 1 to 5, wherein in the depression (7), the maximum depth Dm in the axial direction from the extension surface (5e) of the bearing surface is less than 1.0-fold the thread pitch P (Dm<1.0P).

(Aspect 7)

The nut (1) according to any one of Aspects 1 to 6, wherein in a longitudinal cross-section including the axis of the nut (1) (hereinafter referred to simply as "nut longitudinal cross-section"), the nut body (2) has an release side additional rigidity part at the release side end, and the release side additional rigidity part is a part in which a radial dimension R1 of the radial direction inner side surface is larger than a thread valley radial dimension R0, and an axial direction dimension Ha of the release side additional rigidity part is 0.5-fold or more (Ha≥0.5P), preferably 0.6-fold or more (Ha≥0.6P), more preferably 0.7-fold or more (Ha≥0.7P) the thread pitch P, and preferably 2-fold or less (Ha≤2P), more preferably 1.5-fold or less (Ha≤1.5P), and further preferably 1.0-fold or less (Ha≤1.0P) the thread pitch P.

(Aspect 8)

The nut according to any one of aspects 1 to 7, wherein in the depression (7), a depth Di in the axial direction from the extension surface (5e) of the bearing surface at the axial side end (7i) of the depression (7) is smaller than the maximum depth Dm of the depression (7) (Di<Dm), and preferably a difference Dd=(Dm-Di) between the maximum depth Dm and the depth Di of the depression (7) is greater than 0-fold and 1.3-fold or less (0<Dd≤1.3P) the thread pitch P, more preferably 0.1-fold or more and 1.0-fold or less or less than 1.0-fold (0.1P≤Dd≤1.0P or 0.1P≤Dd<1.0P), and further preferably 0.2-fold or more and 0.8 -fold or less (0.2P≤Dd≤0.8P).

(Aspect 9)

The nut (1) according to any one of Aspects 1 to 8, wherein in the flange part (5), a dimensional difference Lfd= (Rfm-Rn) between a maximum radial dimension Rfm of the flange part (5) and an outer perimeter inscribed cylindrical radial dimension Rn of the gonal nut part (4) is 0.4-fold or more (Lfd≥0.4Ln), preferably 0.45-fold or more (Lfd≥0.45Ln), and more preferably 0.5-fold or more (Lfd≥0.5Ln) relative to the radial direction dimension Ln from the thread valley cylindrical surface (3e) to the outer perimeter inscribed cylindrical surface of the gonal nut part (4), or alternatively, the dimensional difference Lfd is 1.8-fold or more (Lfd≥1.8P), preferably 2.0-fold or more (Lfd≥2.0P), and more preferably 2.1-fold or more (Lfd≥2.1P) the thread pitch P.

(Aspect 10)

The nut (1) according to any one of Aspects 1 to 9, wherein in the flange part (5), an axial height Hfm from the bearing surface (5s) to a boundary (5fm) between the flange part (5) and the gonal nut part (4) is 0.2-fold or more (0.2Hz≤Hfm), preferably 0.25-fold or more and 0.5-fold or less (0.25Hz≤Hfm≤0.5Hz), and more preferably 0.3-fold or more and 0.4-fold or less (0.3Hz≤Hfm≤0.4Hz) of the full length Hz, which is the height of the nut (1) in the axial direction, or alternatively, the height Hfm is 1.5-fold or more (1.5P≤Hfm), preferably 2-fold or more and 6-fold or less (2P≤Hfm≤6P), more preferably 2.4-fold or more and 4-fold or less (2.4P≤Hfm≤4P), and further preferably 2.6-fold or more and 3.5-fold or less (2.6P≤Hfm≤3.5P) the thread pitch P.

(Aspect 11)

The nut according to any one of Aspects 1 to 10, wherein in the nut longitudinal cross-section, the flange part (5) includes a flange outermost perimeter part (5om), which is a portion of the flange part (5) having a radial dimension of a maximum radius Rfm, an inclined part (5c) connecting the flange outermost perimeter part (5om) and the gonal nut part (4), and optionally a stress relaxation part (5r) constituted by a stress relaxation curve connecting the flange outermost perimeter part (5om) and the bearing surface (5s), and the flange outermost perimeter part (5om) may be a straight line or a point extending in the axial direction (Z), and

the flange outermost perimeter part (5om) has a height Hf in the axial direction from the extension surface (5e) of the bearing surface at the boundary (5m) between the flange outermost perimeter part (5om) and the inclined part (5c) which is greater than the maximum depth Dm of the depression (7) (Hf>Dm), and preferably, the height Hf is 1.1-fold or more (Hf≥1.1Dm), more preferably 1.5-fold or more (Hf≥1.5Dm), and further preferably 1.8-fold or more (Hf≥1.8Dm) of the maximum depth Dm of the depression (7), or alternatively, the height Hf is 1.2-fold or more (Hf>1.2P), more preferably 1.4-fold or more (Hf≥1.4P), and further preferably 1.6-fold or more (Hf≥1.6P) the thread pitch P.

(Aspect 12)

The nut (1) according to any one of Aspects 1 to 11, wherein a radial direction dimension Lm from the thread valley cylindrical surface (3e) to the outer side end (7o) of the depression (7) is greater than 1.0-fold (1.0P<Lm) the thread pitch P, the radial direction dimension Lm is smaller than the radial direction dimension Ln from the thread valley cylindrical surface (3e) to the outer perimeter inscribed cylindrical surface of the gonal nut part (4) (Lm<Ln), and preferably, the radial direction dimension Lm is 1.5-fold or more (1.5P≤Lm), more preferably 2.0-fold or more (2.0P≤Lm), 2.5-fold or more (2.5P≤Lm), or 2.8-fold or more (2.8P≤Lm) the thread pitch P, or alternatively, the radial direction dimension Lm is 0.5-fold or more (Lm≥0.5Ln), 0.7-fold or more (Lm≥0.7Ln), 0.8-fold or more (Lm≥0.8Ln), or 0.9-fold or more (Lm≥0.9Ln) the radial direction dimension Ln.

(Aspect 13)

The nut (1) according to Aspect 12, wherein the depression (7) has a portion having a maximum depth Dm, the portion having the maximum depth Dm is located at a radial direction dimension Ldm from the thread valley cylindrical surface (3e), and the radial direction dimension Ldm is greater than two-fifths, preferably greater than one-half, and more preferably greater than two-thirds of the radial direction dimension Lm relative to the radial direction dimension Lm from the thread valley cylindrical surface (3e) to the outer side end (7o) of the depression (7).

(Aspect 14)

The nut (1) according to Aspect 13, wherein in the nut longitudinal cross-section, the depression (7) includes a stress relaxation curve part, preferably a high-order curve part, from the boundary (7o) between the depression (7) and the bearing surface (5s) toward the axial side end (7i) of the depression (7), which includes the portion of the maximum depth Dm, and optionally includes a straight-line part, and in particular a straight-line part (7il) extending substantially in the radial direction (X), and/or a chamfered part on the axial side of the stress relaxation curve part.

(Aspect 15)

The nut (1) according to Aspect 13, wherein in the nut longitudinal cross-section, the depression (7) includes a first straight-line part extending from the boundary between the depression (7) and the bearing surface (5s) toward the release side, the first straight-line part preferably perpendicular to the bearing surface (5s) or inclined at an angle of 45° or less, more preferably 15° or less, from a direction perpendicular to the bearing surface toward the axial side, a stress relaxation curve part, preferably a high-order curve part, extending from the end of the first straight-line part to the inner side in the radial direction and having the portion of the maximum depth Dm, and optionally a second straight-line part (7il) extending substantially in the radial direction to the axial side end (7i) of the depression (7).

(Aspect 16)

The nut (1) according to any one of Aspects 1 to 15, wherein in the nut longitudinal cross-section, the radial dimension Rr of the boundary (7o) between the depression (7) and the bearing surface (5s), and specifically the inner side end (5si) of the bearing surface, is smaller than the outer perimeter inscribed cylindrical radial dimension Rn of the gonal nut part (4) (Rr<Rn), and preferably, the difference Ld between Rn and Rr (Ld=(Rn-Rr)) may be 0.1-fold or more (Ld≥0.1Ln) or 0.2-fold or more (Ld≥0.2Ln), and further preferably 0.1-fold or more and 0.5-fold or less (0.1Ln≤Ld≤0.5Ln) the radial direction dimension Ln relative to the radial direction dimension Ln from the thread valley cylindrical surface (3e) to the outer perimeter inscribed cylindrical surface of the gonal nut part (4), or alternatively, the difference Ld between Rn and Rr may be 0.05-fold or more (Ld≥0.05P), 0.1-fold or more (Ld≥0.1P), or 0.2-fold or more (Ld≥0.2P), and further may be 0.1-fold or more and 1-fold or less (0.1P≤Ld≤1.0P) the thread pitch P.

(Aspect 17)

The nut (1) according to any one of Aspects 1 to 16, wherein the radial direction dimension Ls from the inner side end (5si) to the outer side end (5so) of the bearing surface (5s) is 0.3-fold or more (Ls≥0.3Ln) the radial direction dimension Ln relative to the radial direction dimension Ln from the thread valley cylindrical surface (3e) to the outer perimeter inscribed cylindrical surface of the gonal nut part (4), and preferably 0.4-fold or more (Ls≥0.4Ln), and further preferably 0.45-fold or more (Ls≥0.45Ln) the radial direction dimension Ln, or alternatively, the radial direction dimension Ls is 1.0-fold or more (Ls≥1.0P), preferably 1.5-fold or more (Ls≥1.5P), and further preferably 1.7-fold or more (Ls≥1.7P) the thread pitch P.

(Aspect 18)

The nut (1) according to any one of aspects 1 to 17, and in particular claims 1 and 3 to 17, wherein an area Sm (=S3-S2) obtained by subtracting an area S2 of a circle having a radius which is the axial side end (5si) of the bearing surface from an area S3 of a circle having radius which is the radial dimension Rfm of the flange outermost perimeter part (5om) of the flange part (5) when viewed from the axial direction (Z), is 0.55-fold or more (S≥0.55Ss) relative to the area Ss (=Sn-S0) obtained by subtracting an area S0 of a circle having the radius of the thread valley (3b) radial dimension R0 from an area Sn of a circle having the radius of the outer perimeter inscribed cylindrical radial dimension Rn of the gonal nut part (4), and the area Sm is preferably 0.6-fold or more and 1.2-fold or less (0.6Ss≤S≤1.2Ss), and more preferably 0.7-fold or more and 1.1-fold or less (0.7Ss≤S≤1.1Ss) the area Ss.

(Aspect 19)

The nut (1) according to any one of Aspects 1 to 18, wherein the area S of the bearing surface (5s) is 0.55-fold or more (S≥0.55Ss) relative to the area Ss (=Sn-S0) obtained by subtracting an area S0 of a circle having the radius of the thread valley (3b) radial dimension R0 from an area Sn of a circle having the radius of the outer perimeter inscribed cylindrical radial dimension Rn of the gonal nut part (4), and the area S is preferably 0.6-fold or more and 1.2-fold or less (0.6Ss≤S≤1.2Ss), and more preferably 0.7-fold or more and 1.1-fold or less (0.7Ss≤S≤1.1Ss) the area Ss.

(Aspect 20)

The nut (1) according to any one of Aspects 11 to 19, wherein the radial direction dimension Lr=(Rfm-Rsm) of the stress relaxation part (5r) of the flange part (5) is 0.15-fold or more (Lr≥0.15Ln), preferably 0.2-fold or more (Lr≥0.2Ln) or 0.25-fold or more (Lr≥0.25Ln) the radial direction dimension Ln relative to the radial direction dimension Ln from the thread valley cylindrical surface (3e) to the outer perimeter inscribed cylindrical surface of the gonal nut part (4), or alternatively, the radial direction dimension Lr is 0.7-fold or more (Lr≥0.7P), preferably 0.8-fold or more (Lr≥0.8P), and further preferably 0.9-fold or more (Lr≥0.9P) the thread pitch P.

(Aspect 21)

The nut (1) according to any one of Aspects 11 to 20, wherein in the nut longitudinal cross-section, the inclined part (5c) of the flange part (5) has an angle θ in the range of 15° to 60° (15°≤θ≤60°), preferably 15° to 45° (15°≤θ≤45°), and more preferably 20° to 40° (20°≤θ≤40°) relative to the radial direction.

(Aspect 22)

The nut (1) according to any one of Aspects 1 to 21, wherein the nut body has a reduced diameter part at the release side end, in which a radial dimension R3 of the radial direction outer side surface is smaller than the outer perimeter inscribed cylindrical radial dimension Rn of the gonal nut part (4) (R3<Rn), and the axial direction dimension Hc of the reduced diameter part is larger than the axial direction dimension Ha of the release side additional rigidity part.

(Aspect 23)

A bolt/nut fastening structure, which is a fastening structure for fastening an object to be fastened to a base member using the nut (1) according to any one of Aspects 1 to 22 and a bolt corresponding to the nut (1).

(Aspect 24)

The bolt/nut fastening structure according to Aspect 23, wherein the fastening structure is used in an environment including at least one of vibration, temperature change, pressure change, and corrosive environment.

(Aspect 25)

The bolt/nut fastening structure according to Aspect 23 or 24, which is used for an application selected from the group consisting of automobiles, aircraft, space equipment, bridges, prime movers (motors, engines), wind power generators, construction machinery, civil engineering machinery, mining machinery, railway vehicles, cranes, ships, power generation equipment, power transmission equipment (steel towers), pipelines (flange connections), elevators (elevators, escalators), vacuum equipment, semiconductor production equipment, casting and forging/ironmaking machinery, machine tools, and steel buildings.

[ADVANTAGEOUS EFFECTS OF INVENTION]

According to the present disclosure, it has been unexpectedly discovered that by providing a flange nut having a shallow depression of less than 1.5-fold, preferably 1.25-fold or less, and more preferably 1.0-fold or less or less than 1.0-fold, the thread pitch on the inner side (axial side) of a fastening side bearing surface of the nut, a nut suitable for commercial production in which the load distribution rate to the first fastening meshing thread can be significantly reduced and in which the depression structure is simple can be provided.

BRIEF DESCRIPTION OF DRAWINGS

FIG. 1 (a) is an end view of one half of an axis in a longitudinal cross-section of an example of a nut 1 of the present disclosure.
FIGS. 1(b) and 1(c) are side views of the nut 1 of FIG. 1(a) as viewed from two angles.
FIG. 1(d) is a plan view of the nut 1 of FIG. 1(a) as viewed from above, and FIG. 1(e) is a bottom view of the nut of FIG. 1(a) as viewed from below.
FIGS. 1(f) and 1(g) are photographs of a production example of the nut of the present disclosure.
FIG. 2-1 is a longitudinal cross-sectional end view schematically showing an example of a bolt/nut fastening structure according to the present disclosure.
FIG. 2-2 is a partially enlarged end view of the flange part 5 of the nut 1 of FIG. 2-1.

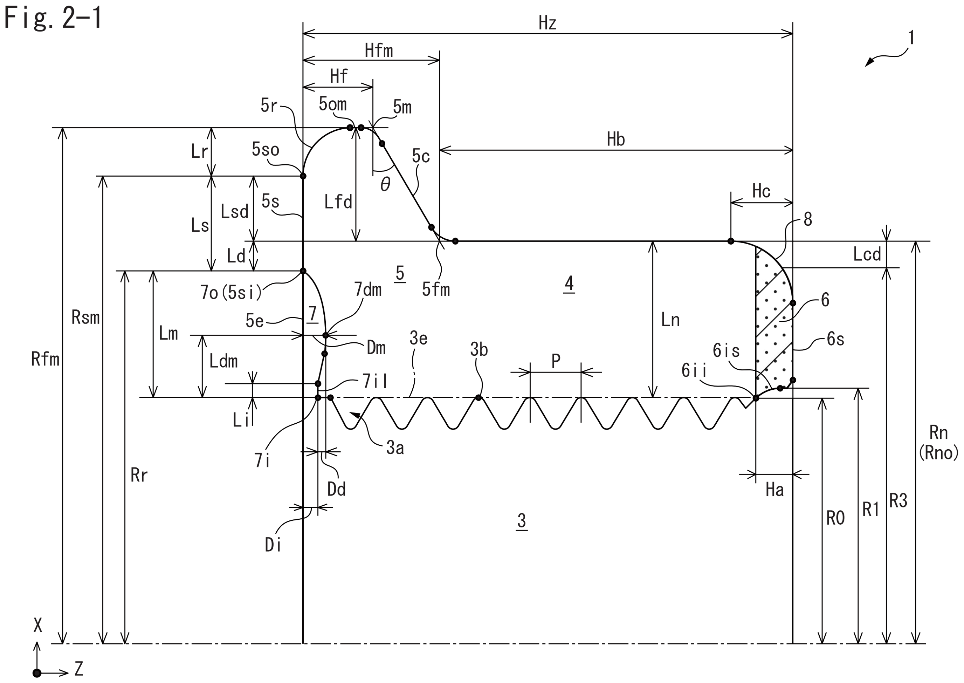

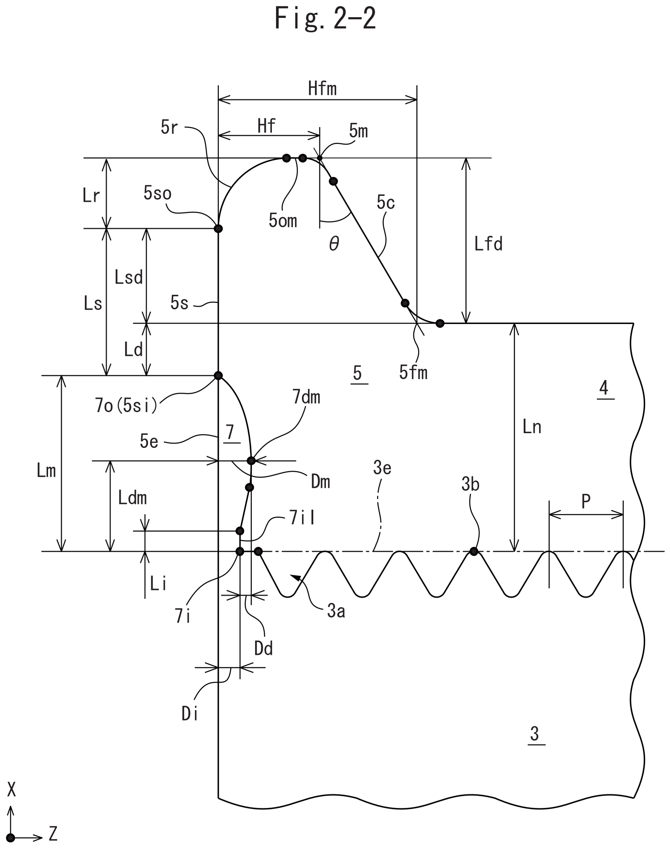

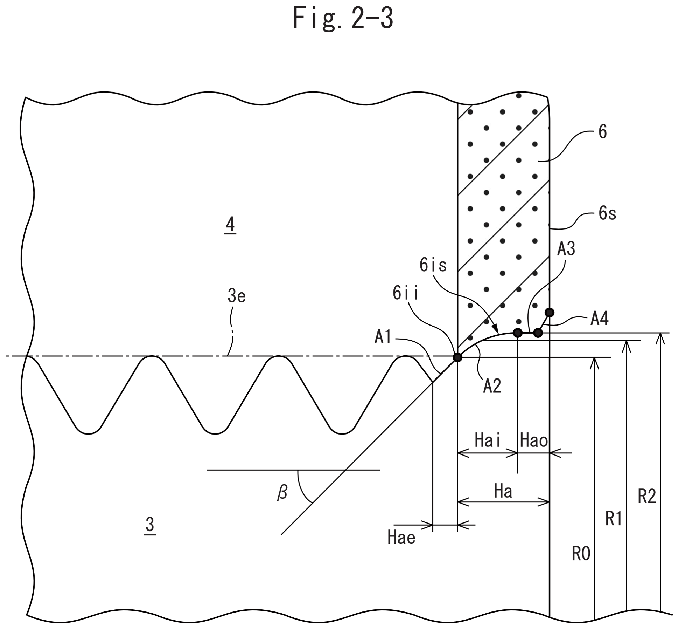

FIG. 2-3 is a partially enlarged end view of the gonal nut part 4 of the nut 1 of FIG. 2-1.

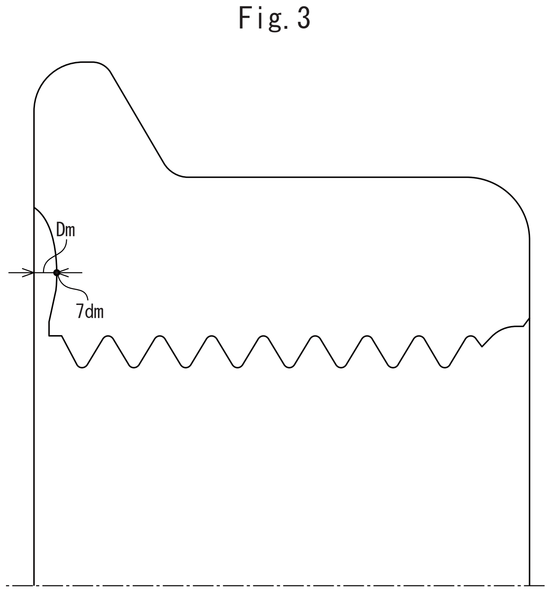

FIG. 3 is a longitudinal cross-sectional end view of another example N1 of the nut of the present disclosure.

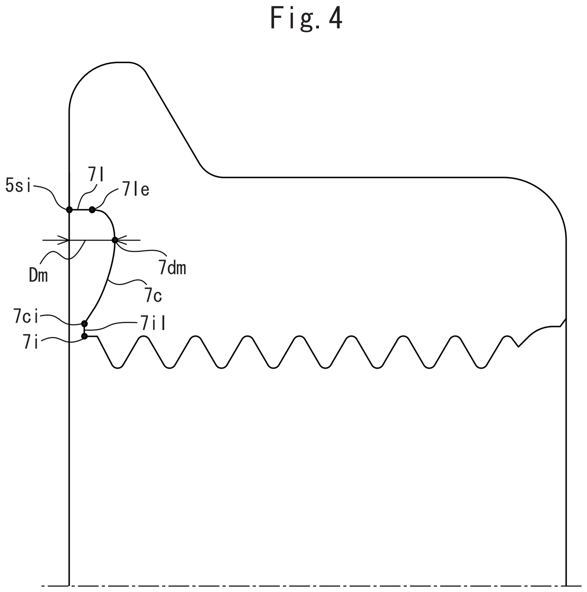

FIG. 4 is a longitudinal cross-sectional end view of another example N5 of the nut of the present disclosure.

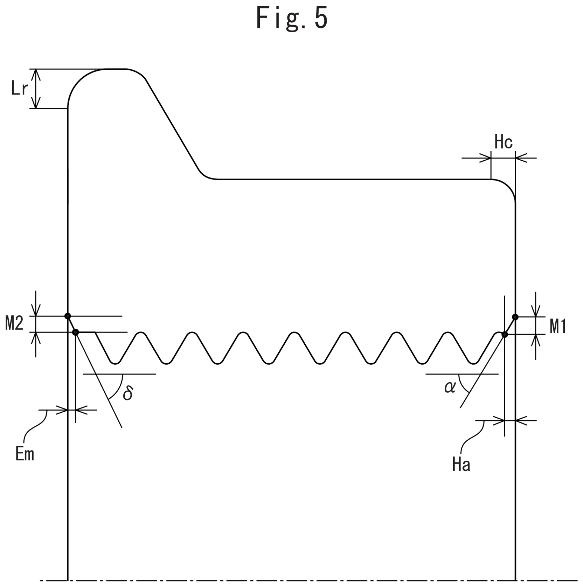

FIG. 5 is a longitudinal cross-sectional end view of a nut D1 of Reference Example 1.

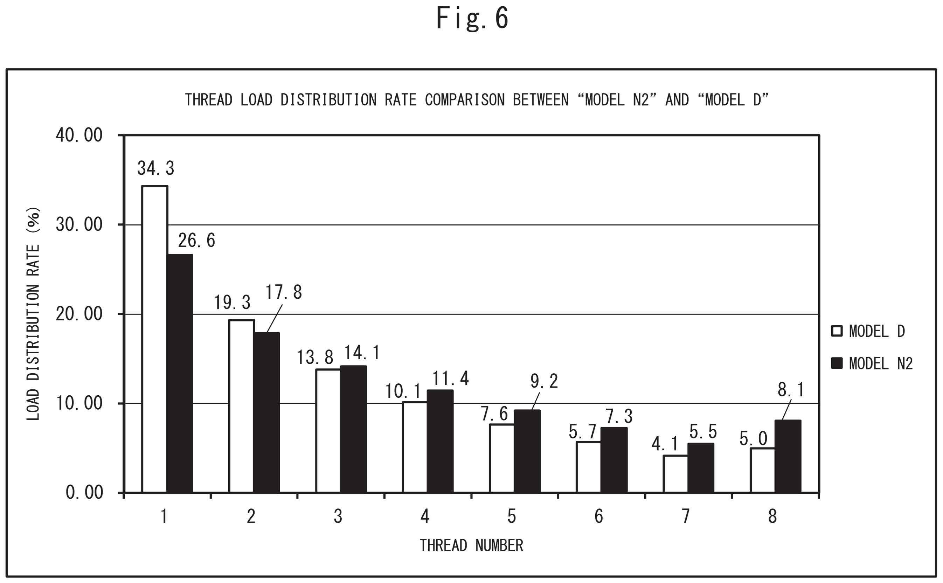

FIG. 6 is a graph showing the load distribution rate for each thread of nut N2 and nut D1 in comparison.

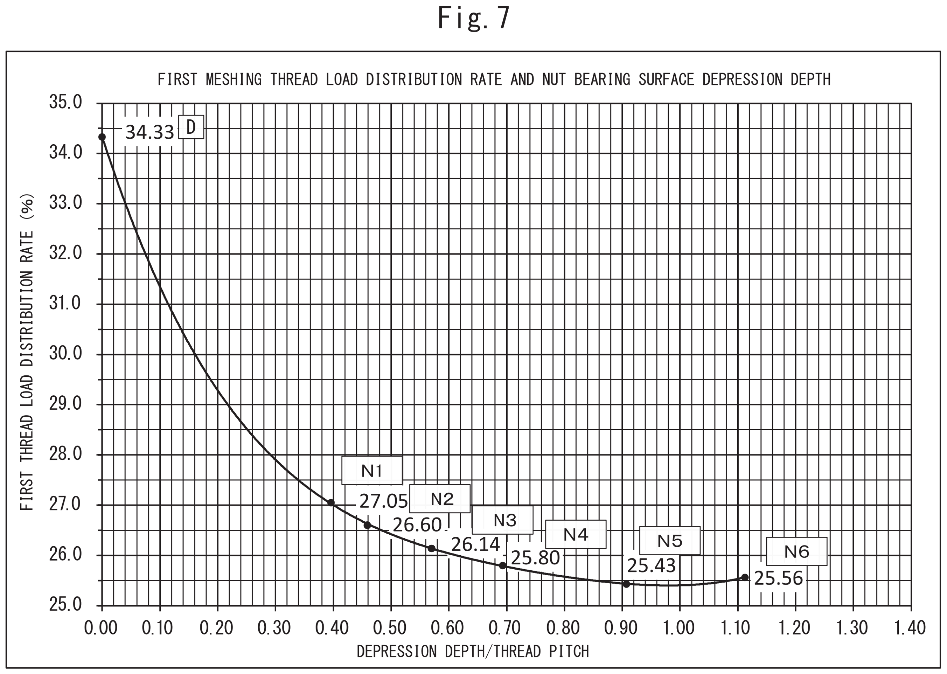

FIG. 7 is a graph showing the relationship between the depression depth of nuts D1 and N1 to N6 and the load distribution rate of the first meshing thread.

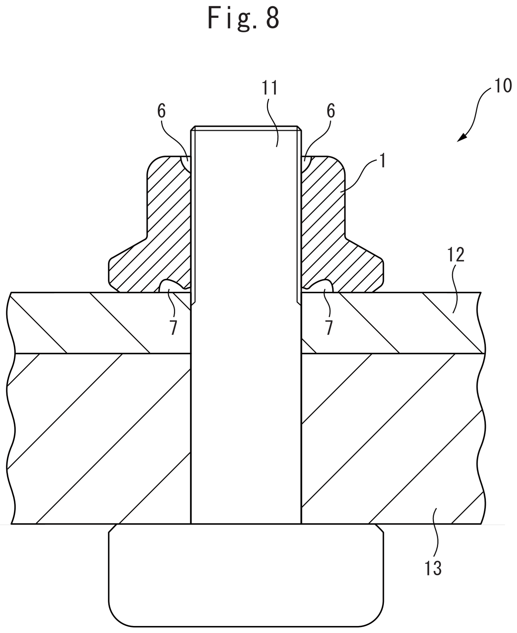

FIG. 8 is a longitudinal cross-sectional view schematically showing an example of a bolt/nut fastening structure according to the present disclosure.

DESCRIPTION OF EMBODIMENTS

The present disclosure is similar to the prior art in that it proposes a structure that reduces the burden share (load distribution rate) of the first meshing thread of the fastening side in order to improve the fatigue fracture life of the thread valley of the first meshing thread of the bolt. However, in the prior art, generally, all of these proposals were merely ideas (conceived ideas) or proposals based on partial empirical knowledge. Therefore, as described in the "BACKGROUND" section, these proposals were either not usable in practice, or even if they were usable, they had both advantages and disadvantages in terms of structure, and were not practical for nuts as general-purpose mass-produced parts. In response to this, the present disclosure explores a structure for reducing the burden share of the first meshing thread of the fastening side of the nut by utilizing the fact that it is possible to comprehensively know what physical stresses are applied to the entire nut and each part by devising the structure and shape of the nut through finite element method analysis (FEM analysis) using a supercomputer (Patent Literature 4). Furthermore, by carrying out FEM analysis using this supercomputer, the present inventors have discovered, completely unexpectedly from conventional knowledge, that by simply providing a shallow depression of less than 1.5-fold the thread pitch (and even 1.25-fold or less, 1.0-fold or less, or less than 1.0-fold, 0.5-fold or less), which was unthinkable in conventional proposals, on the axial side of the fastening side end face (bearing surface) of a nut having a flange part, it is possible to unexpectedly and significantly reduce the burden share of the first meshing thread of the fastening side of the nut, and the degree of this reduction is comparable to the best that can be achieved with the complex structures of conventional technology, and because the depression is shallow and simple, changes to the other structure of the nut can be kept to a minimum by maintaining rigidity using the flange part, and, extremely importantly, since the production and processing of the nut are simple, a nut structure that can be used as a nut in general-purpose mass-produced parts can be completed in terms of both the production process and production costs. The structure and effects of the present disclosure were first discovered, confirmed, and proposed through the use of FEM analysis using a supercomputer.

In the present disclosure, the dimensions of each part of the nut are described in single or multiple numerical ranges for simplicity, but the upper and lower limits in each of these numerical ranges are not inseparable, and the upper limit or the lower limit alone is meaningful. Thus, the numerical ranges of the present disclosure may be numerical ranges composed of any combination of any upper limit and any lower limit in the multiple numerical ranges.

Hereinafter, preferred embodiments of the nut of the present disclosure will be described with reference to the drawings. However, the drawings and reference signs are merely for the convenience of explanation, and the present disclosure is not limited by the descriptions of the drawings and reference signs.

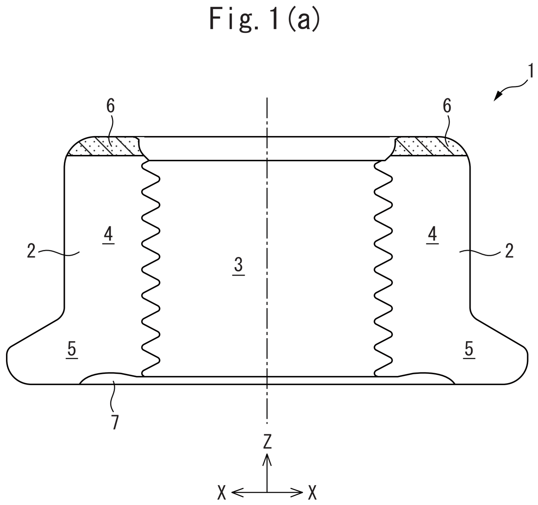

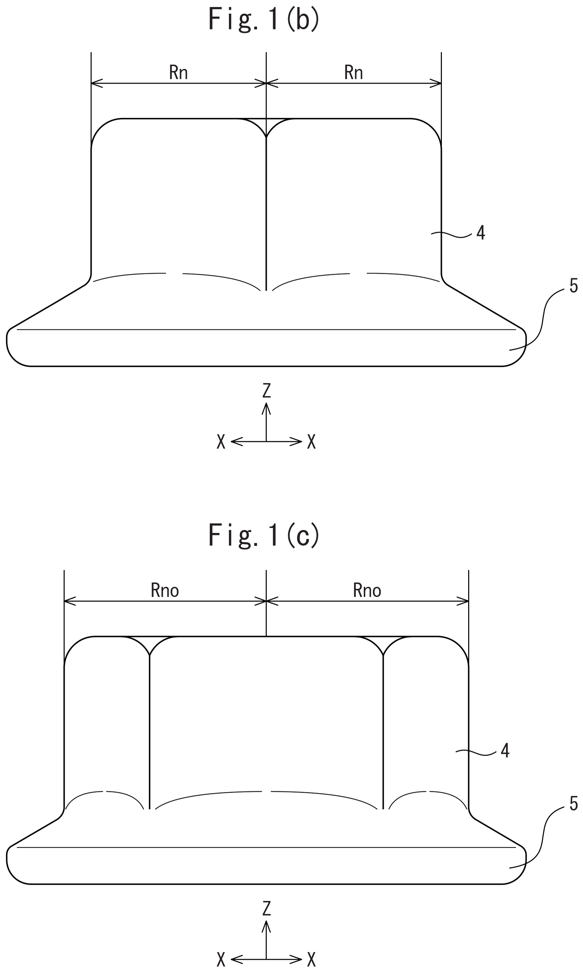

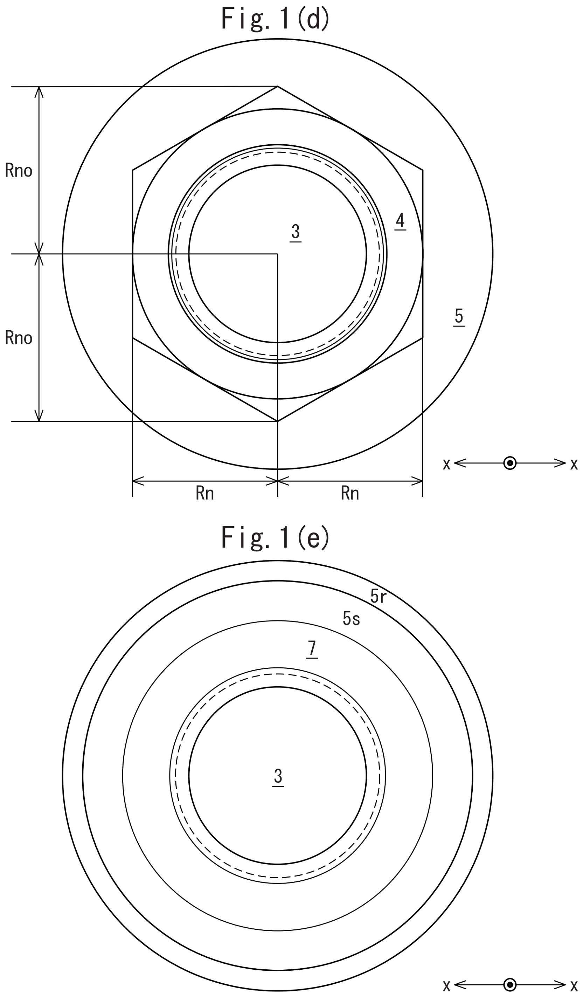

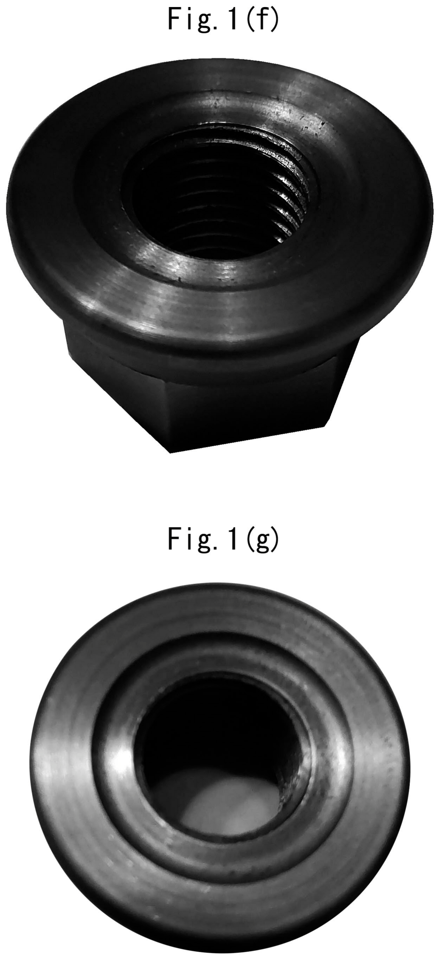

FIGS. 1(a), 1(b) and 1(c) (these drawings, together with FIG. 1(d), are also collectively referred to as simply FIG. 1) show a hexagonal nut (hereinafter simply referred to as simply a nut) as an example of a preferred embodiment of the present disclosure, and specifically, FIG. 1(a) is a longitudinal cross-sectional end view (hereinafter simply referred to as a "nut longitudinal cross-section") including the axis of the nut, and FIGS. 1(b) to 1(e) are two side views, a top view, and a bottom view of the nut. FIGS. 1(f) and 1(g) are photographs of a prototype nut based on the present disclosure.

FIG. 2-1 is an enlarged end view showing half of the nut longitudinal cross-section of the nut of FIG. 1. FIG. 2-2 is an enlarged end view of a portion of the flange part of the nut of FIG. 2-1. FIG. 2-3 is an enlarged end view of a portion of the gonal nut part of the nut of FIG. 2-1. In FIGS. 1(a) to 1(c), 2-1, and 2-2, the axial direction is Z and the radial direction is X.

In FIGS. 1(a) to 1(e), reference sign 1 is a nut, 2 is a nut body, 3 is a threaded hole, 4 is a gonal nut part (an angular nut part), 5 is a flange part, 6 is an release side additional rigidity part (the part with hatching and dots), and 7 is a depression. In FIG. 1(d), reference sign Rn represents the radius of the cylindrical surface (virtual) inscribed on the outer periphery of the gonal nut part 4, and Rno represents the radius of the cylindrical surface (virtual) circumscribed on the outer periphery of the gonal nut part 4. When viewing some nuts from the release side, a line which coincides with the cylindrical surface inscribed and circumscribed on the outer periphery of the gonal nut part 4 may be visible, but the definitions of Rn and Rno are based solely on the virtual cylindrical surfaces inscribed and circumscribed on the outer periphery of the gonal nut part 4. Furthermore, in the longitudinal cross-section of the nut, the outer peripheral dimensions differ depending on the position of the outer periphery of the gonal nut part in the cross section, but the structure is the same. In the longitudinal cross-section diagram of the present disclosure, the outer periphery of the gonal nut part is basically a cylindrical surface inscribed on the outer perimeter surface of the gonal nut part, but for example, when describing a cylindrical surface circumscribed on the outer perimeter surface, the longitudinal cross-section diagram of the present disclosure may be considered as a longitudinal cross-section diagram representing a cylindrical surface circumscribed on the outer perimeter surface.

Nut

The nut 1 of the present disclosure is a flange nut having a nut body 2 and a threaded hole 3, and the nut body 2 has a gonal nut part 4 and a flange part 5 along its axis Z. In the nut 1 of the present disclosure, in the axis Z direction, the flange part 5 side is the fastening side where an object to be fastened, which may include a washer, is present, and the gonal nut part 4 side is the side opposite to the fastening side and is referred to as the release side. In the prior art, generally, only the annular part on the fastening side of the nut body of a gonal nut, which has a radial dimension larger than that of the nut body, is often referred to the flange part, but in the present disclosure, not only the annular part having radial dimension larger than that of the nut body (flange part in the narrow sense), but also the nut body part corresponding to that part and present on the radial direction inner side is referred to as the flange part for convenience (flange part in the broad sense). Likewise, the part of the nut body excluding the flange part (the part of the shaft where the outer diameter dimension does not increase) is referred to as the gonal nut part in the broad sense. In the nut 1 of the present disclosure, in the radial direction X perpendicular to the axis (axial direction) Z, the side closer to the axis Z is referred to as the inner side, and the side farther from the axis Z is referred to as the outer side (outer peripheral side).

The shape, dimensions, strength class, material, etc., of the nut are specified in standards such as ISO and JIS, and in particular the various dimensions are specified for each threaded hole diameter (for example, M12 is a nut with a threaded hole diameter, which is the diameter of the thread valley, of 12 mm). In the nut of the present disclosure, for parts not specifically specified, the standard shape, dimensions, strength class, material, etc., specified in the standards can be used as a base.

### Nut Body

The nut 1 of the present disclosure has various dimensions in the radial direction X perpendicular to the axis Z. In the present disclosure, when the "radial dimension" ("radius") of each part is described without particular clarification, it refers to the dimension (radius) from the axis to a specific part in the radial direction, starting from the axis, and when the "radial direction dimension" is described, it refers to the dimension between specific sites (parts) (in particular, other than the axis) in the radial direction.

In the present disclosure, the nut body 2 includes a gonal nut part 4 and a flange part 5, the flange part 5 is on the fastening side of the gonal nut part 4 and has a radial dimension (for example, Rfm) larger than the maximum radial dimension Rno of the periphery of the gonal nut part 4. The gonal nut part 4 has an outer perimeter inscribed cylindrical radial dimension Rn, which is the radial dimension of the cylindrical surface inscribed on the outer perimeter surface, and an outer perimeter circumscribed cylindrical radial dimension (maximum periphery radius) Rno, which is the radial dimension of the cylindrical surface circumscribed on the outer perimeter surface (refer to FIGS. 1(b), 1(c), and 1(d)). The cylindrical surface inscribed or circumscribed on the outer perimeter surface of the gonal nut part 4 is a virtual surface. For example, in the case of a hexagonal nut, it is known that in a plan view of the nut as viewed from the axial direction, the outer perimeter dimension (outer diameter) has a diagonal dimension ("diagonal") which is the distance between two opposing corners passing through the axis, and a "flat diameter" ("two-face width") which is the distance between two parallel sides. The diagonalal dimension is the outer perimeter cylindrical diameter, and the flat diameter (two-face width) is the outer perimeter inscribed cylindrical diameter. Since the objective of the present disclosure is to transmit fastening force, the radial dimension of the outer perimeter diameter of the gonal nut part 4 is basically the outer perimeter inscribed cylindrical radial dimension Rn, and the outer perimeter inscribed cylindrical radial dimension Rn is intended unless otherwise specified, but in some cases, for example, in the definition of a flange part, the outer perimeter circumscribed cylindrical radial dimension Rno is also referenced.

The shape, dimensions, strength class, material, etc., of the nut body 2 are also defined in standards such as JIS, ISO, EN, etc., and in particular, the various dimensions are defined for each diameter of the threaded hole. In the nut of the present disclosure, the shape, dimensions, strength class, material, etc., of the nut body 2, in particular the gonal nut part 4 (for example, the height of the hexagonal nut, the shape, dimensions, strength class, material, etc., of the hexagonal nut part as viewed from the axial direction) can be based on the standard specifications defined in those standards.

The nut 1 of the present disclosure is characterized by having a depression 7 on the fastening side end of the nut body 2, and in a preferred embodiment, has an release side additional rigidity part 6, etc. The shape, dimensions, etc., of the nut body 2 of the present disclosure are modified and changed from the standard shape, dimensions, etc., due to the presence of the depression 7 and optionally the release side additional rigidity part 6, etc. The influence of the depression 7 and the release side additional rigidity part 6, etc., on the shape, dimensions, etc., of the nut 1 of the present disclosure will be described later.

The nut 1 of the present disclosure is also characterized by having a flange part 5 corresponding to the depression 7. There are standards such as JIS for the shape and dimensions of flange nuts, and the nut 1 of the present disclosure can also adopt these standards as a base. The shape and dimensions of the flange part 5 may be modified in relation to the depression 7, but the shape and dimensions of the flange part 5 will be described later.

The nut 1 of the present disclosure has a height (total length) Hz in the axial direction. The height Hz of the nut 1 is the dimension, or maximum dimension, in the axial direction from the bearing surface 5s, which is a flat surface at the end of the flange part 5 and extending in the radial direction, or its extension surface (5e; virtual surface), to the release side end surface 6s of the gonal nut part 4. In a preferred embodiment, as described below, the nut 1 of the present disclosure includes an release side additional rigidity part 6 at the release side end of the gonal nut part 4, and in that case, the height Hz of the nut 1 is the dimension including the release side additional rigidity part 6.

The height Hz of the nut 1 of the present disclosure may be the height in the standard or a height based on the standard, but when the nut 1 has an release side additional rigidity part 6, the height may be greater than the height of the standard or the height based on the standard. The relationship between the height Hz of the nut 1 of the present disclosure and the height in the standard or the height based on the standard will be described later in connection with the release side additional rigidity part 6.

### Threaded Hole

The threaded hole 3 is a hole into which the threaded portion of a male thread or a bolt is inserted, and is a cylindrical hole with a female thread groove. A female thread is a helical thread groove formed on the inner surface of a nut. The thread groove is composed of a ridge (head), a valley (bottom), and an inclined part connecting the ridge and valley. In the case of the nut 1, the ridge is on the inner side (axial side) of the radial direction of the nut 1, and the valley is on the outer side of the radial direction of the nut 1. The ridge and valley of the thread may refer to the high and low parts of the thread groove, but in certain cases they refer to the top and bottom of the thread groove. For example, reference to the threaded hole diameter (valley diameter of a female thread) is intended to indicate the diameter of the valley bottom of the thread groove.

The threaded hole 3 has a threaded hole radius (also referred to as the "threaded hole radial dimension") R0, which is half the threaded hole diameter (female thread valley diameter) $\varphi$. In the drawings, only the threaded hole radius R0 is shown, and the female thread valley diameter $\varphi$ is not illustrated, but the female thread valley diameter $\varphi$ is a diameter ($\varphi=2RO$) that completely corresponds to the threaded hole radius R0. Since the threaded hole diameter refers to the diameter of the thread valley cylindrical surface 3e formed by connecting the thread valleys 3b of the threaded hole 3, the thread valley radial dimension R0 is the dimension (radius) in the radial direction from the axis Z to the thread valley cylindrical surface 3e. Furthermore, the thread valley cylindrical surface 3e of the threaded hole 3 is a virtual surface, and in the present disclosure, refers to a cylindrical surface including not only the part that actually has thread valleys in the axial direction, but also the part extended on both sides thereof in the axial direction. Furthermore, the thread valley cylindrical surface 3e of the threaded hole 3 becomes a straight line 3e connecting the thread valleys 3b in a longitudinal cross-section including the axis Z of the nut (hereinafter simply referred to as the "nut longitudinal cross-section"), but in the present disclosure, both the thread valley cylindrical surface and the straight line are represented by the same reference symbol "3e."

The threaded hole diameter of the nut 1, and more specifically, the valley diameter $\varphi$ of the female thread, is defined in the standards for threads and nuts, and is the diameter corresponding to the outer diameter of the male thread (referred to as the nominal diameter of the thread). The valley diameter $\varphi$ of the female thread can be determined and measured from the shape and dimensions of the female thread (and in particular, the inclined surface from the peak to the valley of the female thread), but is generally measured using a thread gauge. The threaded hole of the female thread may actually have a part deeper than the valley diameter (nominal diameter) of the female thread to smoothly engage with the male thread, but the part deeper than the valley diameter of the female thread is extra as the female thread and is not included in the valley diameter of the female thread. However, if necessary, the valley diameter may be the diameter of the bottom of the extra part deeper than the valley diameter of the female thread defined above.

The threaded hole 3 has a thread pitch P. The thread pitch P is the distance in the axial direction when the thread groove of the threaded hole 3 rotates 360° and moves a specific distance in the axial direction, and can be defined as the dimension in the axial direction from one thread valley 3b to an adjacent thread valley 3b of the threaded hole 3, or from one peak to an adjacent peak of the threaded hole 3.

The thread pitch P of the threaded hole 3 of the nut is specified for each threaded hole diameter (valley diameter of the female thread) of the nut in JIS (in particular, JIS-B0205, JIS-B0206, etc.) and standards of each country and international organization corresponding to the JIS, for example, ASTM (American Society for Testing and Materials) in the United States, BS (British Standards) in the United Kingdom, DIN (*Deutsche Industrie-Norm*) in Germany, GB standard (*Guo jia Biao zhun*) in China, CNS standard (Chinese National Standards) in Taiwan, KS standard (Korean Standards) in Korea, and ISO as an international standard, and the thread pitch P of the standards can be adopted in the nut 1 of the present disclosure. Since these standards basically correspond to each other, it is sufficient to refer to the JIS or ISO and, if necessary, other standards.

There are metric thread standards (for example, JIS-B0205) and unified thread standards (for example, JIS-B0206) for thread standards. The metric thread standard specifies the thread pitch for the nominal diameter (outer diameter of the male thread and the female thread valley diameter), whereas the unified thread standard specifies the outer diameter of the male thread and the valley diameter of the female thread for the nominal thread (number of threads per inch). The two standards of metric threads and unified threads are not identical, and in particular, since the nominal diameter and nominal value are rounded off, but are similar to each other in terms of substantial dimensions. The nut of the present disclosure can be preferably applied to nuts based on both metric threads and unified threads, but is particularly preferably applied to nuts based on metric threads. The threaded hole diameter is referred to as the nominal diameter. For example, M12 is a nut used for a bolt with an outer diameter of 12 mm, and the threaded hole diameter (valley diameter of the female thread) can be considered to be substantially approximately 12 mm.

In the above standards, there are standards for coarse threads and fine threads regarding the pitch of the thread, and many standard dimensions specify whether the thread is a coarse thread or a fine thread. However, for example, in "Table 1: Standard Dimensions" of "General Metric Threads - Part 4: Standard Dimensions" of JIS B0205-4 (ISO-724), multiple thread pitches are listed for the same female thread valley diameter (nominal diameter) without specifying coarse thread or fine thread. In this case, the largest thread pitch is a coarse thread, and any thread pitch smaller than that is a fine thread. The nut of the present disclosure can be applied to both coarse threads and fine threads, and more specifically, to all threads. A preferred embodiment provides a fine thread of a metric thread or a fine thread of a unified thread, but is particularly suitable for a fine thread of a metric thread, which is a commonly adopted standard.

The nut (1) of the present disclosure is particularly useful in fine threads. In applications requiring durability and long lifespan against harsh environments such as vibration, temperature change, pressure change, and corrosive environments (environment more corrosive than air), such as automobiles, aircraft, space equipment, bridges, prime movers (motors, engines), wind power generators, construction machinery, civil engineering machinery, mining machinery, railroad vehicles, cranes, ships, power generation equipment, power transmission equipment (steel towers), pipelines (flange connections), elevators (elevators, escalators), vacuum equipment, semiconductor production equipment, casting and forging/iron-making machinery, machine tools, and steel buildings, fine threads are used to achieve strong fastening. In such harsh environment applications, the bolt and nut are fastened with a high fastening force, but because of this, the bolt and nut, and in particular, the bolt, are more likely to break in the threaded part of the first meshing thread over many years of use, making it difficult to achieve a long life, and the effectiveness of the nut of the present disclosure is remarkable.

In applications requiring durability against harsh environments and a long lifespan as described above, screws and nuts with a large thread diameter are preferably used to achieve strong fastening. Though the present disclosure is not limited by the thread diameter, for example, thread diameters of 6 mm or more, 8 mm or more, or 10 mm or more are preferably used, and the effects of the present disclosure are more pronounced and more useful in nuts used with screws with such large thread diameters. Though the maximum thread diameter is 310 mm in the above example, nuts having a larger thread diameter are also useful. Nuts which are generally widely used are M6 to M120 (thread diameter 6 to 120 mm), and the nut of the present disclosure can also be preferably used with nuts of M6 to M120. However, the nut of the present disclosure is not limited to these.

A preferred embodiment of the present disclosure can be obtained from a graph showing metric threads and unified threads with the valley diameter (diameter) $\varphi$ of the female thread of the nut on the horizontal axis and the thread pitch P on the vertical axis as a range of thread pitch P smaller than the thread pitch of the coarse threads of both metric threads and unified threads. When the thread pitch is P (unit: mm) and the valley diameter (diameter) of the female thread of the nut is $\varphi$ (unit: mm), the following relationships are satisfied, and specifically:

when $0.5<\varphi\leq1.3$, $P\leq(1/20)\varphi+0.17$,
when $1.3<\varphi\leq2.3$, $P\leq(0.12/0.8)\varphi+0.07$,
when $2.3<\varphi\leq6.5$, $P\leq(0.6/4)\varphi+0.02$,
when $6.5<\varphi\leq12$, $P\leq(0.55/4)\varphi-0.07$,
when $12<\varphi\leq41$, $P\leq(2.55/29)\varphi+0.48$,
when $41<\varphi\leq125$, $P\leq(2/85)\varphi+3.06$, and
when $125<\varphi\leq320$, $P\leq7.80$.

In these preferable ranges, the maximum value of P may be reduced by 0.01 mm. For example, when $0.5<\varphi\leq1.2$, $P\leq(1/20)\varphi+0.16$, further $P\leq(1/20)\varphi+0.15$ and when $1.2<\varphi\leq2.2$, $P\leq(0.12/0.8)\varphi+0.06$, etc. may be satisfied, and more preferably:

when $0.5<\varphi\leq1.3$, $P\leq(1/15)\varphi+0.14$,
when $1.3<\varphi\leq2.3$, $P\leq(1.3/9)\varphi+0.06$,
when $2.3<\varphi\leq6.5$, $P\leq(0.09/0.8)\varphi+0.08$,
when $6.5<\varphi\leq12$, $P\leq(0.55/4)\varphi-0.19$,
when $12<\varphi\leq41$, $P\leq(2.55/29)\varphi+0.28$,
when $41<\varphi\leq125$, $P\leq(1/78)\varphi+3.46$,
when $125<\varphi\leq320$, $P\leq7.50$, $P\leq7.00$, or further $P\leq6.50$ may be satisfied.

In these preferred and more preferable ranges, the maximum value of P may be smaller by unit of 0.01 mm, for example, in the preferable ranges, when $0.5<\varphi\leq1.2$, the P range may be $P\leq(1/20)\varphi+0.16$, further $P\leq(1/20)\varphi+0.15$ and when $1.2<\varphi\leq2.2$, the P range may be $P\leq(0.12/0.8)\varphi+0.06$. Though the above preferred and more preferable ranges are each an integrated range, only in one or more subdivisions of the female thread valley diameter $\varphi$ among the preferable ranges of thread pitch P, the preferable range(s) of thread pitch P may be changed to the more preferable range(s) of thread pitch P.

Another preferred embodiment of the present disclosure can be obtained as a range of thread pitch P for each range of the female thread valley diameter (diameter) $\varphi$ that is smaller than the thread pitch of the coarse thread of both metric and unified threads, using a table showing the valley diameter (diameter) $\varphi$ of the female thread of the nut in the metric and unified thread standards. When the thread pitch is P (unit: mm) and the valley diameter (diameter) of the female thread of the nut is $\varphi$ (unit: mm), the relationship shown in Table B (Tables B-1 to B-4) below may be satisfied. Table B also shows examples of preferred combinations of the thread pitch P and the female thread valley diameter $\varphi$ of the nut based on the standards. In Table B, there are some cases where multiple ranges are listed in the column for the same thread pitch P range. In the examples of the pitch P, there are some cases where there are multiple pitches P for the same thread valley diameter. Furthermore, the upper limit value of the range of the thread pitch P in the preferable ranges, more preferable ranges, and further preferable ranges of the pitch P listed in Table B (Tables B-1 to B-4) may be further reduced in 0.01 mm units.

Table B-1: Ranges and examples of thread pitch P

| Range of pitch P | | | | Ex of preferable pitch P | |
|---|---|---|---|---|---|
| Female thread valley diameter φ (mm) | Preferable range of P (mm) | More preferable range of P (mm) | Further preferable range of P (mm) | Female thread valley diameter(mm) | P (mm) |
| φ≤1.3 | 0.24 or less | 0.05 to 0.23 | 0.1 to 0.22 | 1<br>1.1<br>1.2 | 0.2<br>0.2<br>0.2 |
| 1.3<φ≤1.5 | 0.28 or less | 0.05 to 0.27 | 0.1 to 0.23 | 1.4 | 0.2 |
| 1.5<φ≤1.7 | 0.30 or less | 0.05 to 0.32 | 0.1 to 0.28 | 1.6 | 0.2 |
| 1.7<φ≤1.9 | | | | 1.8 | 0.2 |
| 1.9<φ≤2.1 | 0.38 or less | 0.05 to 0.37 | 0.15 to 0.33 | 2 | 0.25 |
| 2.1<φ≤2.7 | 0.43 or less | 0.1 to 0.42 | 0.15 to 0.38 | 2.2<br>2.5 | 0.25<br>0.35 |
| 2.7<φ≤3.2 | 0.48 or less | 0.1 to 0.47 | 0.2 to 0.43 | 3 | 0.35 |
| 3.2<φ≤3.7 | 0.58 or less | 0.1 to 0.57 | 0.25 to 0.48 | 3.5 | 0.35 |
| 3.7<φ≤4.2 | 0.68 or less | 0.2 to 0.67 | 0.3 to 0.57 | 4 | 0.5 |
| 4.2<φ≤4.7 | 0.73 or less | 0.2 to 0.72 | 0.3 to 0.67 | 4.5 | 0.5 |
| 4.7<φ≤5.5 | 0.78 or less | 0.2 to 0.77 | 0.3 to 0.72 | 5<br>5.5 | 0.5<br>5.5 |
| 5.5<φ≤7.5 | 0.98 or less | 0.3 to 0.95 | 0.35 to 0.77 | 6<br>7 | 0.75<br>0.75 |
| 7.5<φ≤9.5 | 1.20 or less | 0.3 to 1.15 | 0.4 to 1.10<br>0.4 to 0.9 | 8<br>9 | 1, 0.75<br>1, 0.75 |
| 9.5<φ≤11.5 | 1.40 or less | 0.4 to 1.45 | 0.5 to 1.35<br>0.5 to 1.15 | 10<br>11 | 1.25, 1, 0.75<br>1, 0.75 |

Table B-2: Ranges and examples of thread pitch P

| Range of pitch P | | | | Ex of preferable pitch P | |
|---|---|---|---|---|---|
| Female thread valley diameter φ (mm) | Preferable range of P (mm) | More preferable range of P (mm) | Further preferable range of P (mm) | Female thread valley diameter(mm) | P (mm) |
| 11.5<φ≤13 | 1.70 or less | 0.5 to 1.65 | 0.6 to 1.6 | 12 | 1.5, 1.25, 1 |
| 13<φ≤17 | 1.90 or less | 0.5 to 1.8 | 0.7 to 1.4<br>0.7 to 1.70 | 14<br>15 | 1.5, 1.25, 1<br>1 |
| 17<φ≤23 | 2.40 or less | 0.5 to 2.3 | 0.7 to 2.1<br>1 to 1.8 | 16<br>17<br>18<br>20 | 1.5, 1<br>1<br>2, 1.5, 1<br>2, 1.5, 1 |
| 23<φ≤29 | 2.80 or less | 0.5 to 2.7 | 0.7 to 2.6<br>1 to 2.3 | 22<br>24<br>25<br>26<br>27 | 2, 1.5, 1<br>2, 1.5, 1<br>1.5, 1<br>1.5<br>2, 1.5, 1 |

(continued)

| Range of pitch P | | | | Ex of preferable pitch P | |
|---|---|---|---|---|---|
| Female thread valley diameter φ (mm) | Preferable range of P (mm) | More preferable range of P (mm) | Further preferable range of P (mm) | Female thread valley diameter(mm) | P (mm) |
| 29<φ≤35 | 3.30 or less | 0.5 to 3.2 | 0.7 to 3.1 1 to 2.8 | 28 30 32 33 | 1.5, 1 3, 2, 1.5, 1 2, 1.5 3, 2, 1.5 |
| 35<φ≤40 | 3.80 or less | 0.5 to 3.7 | 0.7 to 3.6 1 to 3.3 | 35 36 38 39 | 1.5 3, 2, 1.5 1.5 3, 2, 1.5 |
| 41<φ≤45 | 4.30 or less | 0.5 to 4.2 | 0.7 to 4.1 | 40 42 | 3, 2, 1 4, 3, 2, 1.5 |

Table B-3: Ranges and examples of thread pitch P

| Range of pitch P | | | | Ex of preferable pitch P | |
|---|---|---|---|---|---|
| Female thread valley diameter φ (mm) | Preferable range of P (mm) | More preferable range of P (mm) | Further preferable range of P (mm) | Female thread valley diameter(mm) | P (mm) |
| 45<φ≤55 | 4.80 or less | 0.5 to 4.7 | 0.7 to 4.6 1 to 4.3 | 48 50 52 55 | 4, 3, 2, 1.5 3, 2, 1.5 4, 3, 2, 1.5 4, 3, 2, 1.5 |
| 55<φ≤62 | 5.30 or less | 0.5 to 5.2 | 0.7 to 5.1 1 to 4.8 | 56 58 60 62 | 4, 3, 2, 1.5 4, 3, 2, 1.5 4, 3, 2, 1.5 4, 3, 2, 1.5 |
| 62<φ≤122 | 5.80 or less | 0.5 to 5.7 | 0.7 to 5.6 1 to 5.3 | 64 65 68 70 72 75 76 78 80 82 85 90 95 100 105 110 115 120 | 4, 3, 2, 1.5 4, 3, 2, 1.5 4, 3, 2, 1.5 4, 3, 2, 1.5 4, 3, 2, 1.5 4, 3, 2, 1.5 4, 3, 2, 1.5 2 4, 3, 2, 1.5 2 4, 3, 2 4, 3, 2 4, 3, 2 4, 3, 2 4, 3, 2 4, 3, 2 4, 3, 2 4, 3, 2 |

Table B-4: Ranges and examples of thread pitch P

| Range of pitch P | | | | Ex of preferable pitch P | |
|---|---|---|---|---|---|
| Female thread valley diameter φ (mm) | Preferable range of P (mm) | More preferable range of P (mm) | Further preferable range of P (mm) | Female thread valley diameter(mm) | P (mm) |
| 122<φ≤310 | 7.80 or less | 0.5 to 7.7 | 0.7 to 7 | 125 | 6, 4, 3, 2 |
| | | | 1 to 5.7 | 130 | 6, 4, 3, 2 |
| | | | | 135 | 6, 4, 3, 2 |
| | | | | 140 | 6, 4, 3, 2 |
| | | | | 145 | 6, 4, 3, 2 |
| | | | | 150 | 6, 4, 3, 2 |
| | | | | 155 | 6, 4, 3 |
| | | | | 160 | 6, 4, 3 |
| | | | | 165 | 6, 4, 3 |
| | | | | 170 | 6, 4, 3 |
| | | | | 175 | 6, 4, 3 |
| | | | | 180 | 6, 4, 3 |
| | | | | 185 | 6, 4, 3 |
| | | | | 190 | 6, 4, 3 |
| | | | | 195 | 6, 4, 3 |
| | | | | 200 | 6, 4, 3 |
| | | | | 205 | 6, 4, 3 |
| | | | | 210 | 6, 4, 3 |
| | | | | 215 | 6, 4, 3 |
| | | | | 220 | 6, 4, 3 |
| | | | | 225 | 6, 4, 3 |
| | | | | 230 | 6, 4, 3 |
| | | | | 235 | 6, 4, 3 |
| | | | | 240 | 6, 4, 3 |
| | | | | 245 | 6, 4, 3 |
| | | | | 250 | 6, 4, 3 |
| | | | | 255 | 6, 4 |
| | | | | 260 | 6, 4 |
| | | | | 265 | 6, 4 |
| | | | | 270 | 6, 4 |
| | | | | 275 | 6, 4 |
| | | | | 280 | 6, 4 |
| | | | | 285 | 6, 4 |
| | | | | 290 | 6, 4 |
| | | | | 295 | 6, 4 |
| | | | | 300 | 6, 4 |

Gonal Nut Part

The gonal nut part 4 of the nut body 2 is a hexagonal, octagonal, pentagonal, quadrangular, or other angular shape (gonal shape), preferably an even-numbered angular shape, typically a hexagonal angular shape, and hereinafter, unless otherwise specified, the gonal nut part 4 will be described based on a hexagonal nut part. However, it is clear that the nut of the present disclosure is not limited to hexagonal nuts. The gonal nut part 4 has an outer perimeter inscribed cylindrical radial dimension Rn, which is the radial dimension of the cylindrical surface inscribed on the outer perimeter surface, and an outer perimeter circumscribed cylindrical radial dimension (maximum outer perimeter radius) Rno, which is the radial dimension of the cylindrical surface circumscribed on the outer perimeter surface. The cylindrical surface inscribed or circumscribed on the outer perimeter surface of the gonal nut part 4 is a virtual surface. In the present disclosure, since the transmission of fastening force is an issue, the radial dimension of the outer perimeter diameter of the gonal nut part 4 is basically the outer perimeter inscribed cylindrical radial dimension Rn, and unless otherwise specified, means the outer perimeter inscribed radial dimension Rn, but in some cases, for example, in the definition of a flange part, the outer perimeter circumscribed cylindrical radial dimension Rno may also be referenced. In the attached drawings, since the structure is the same whether the outer periphery of the gonal nut part 4 represents the inscribed or circumscribed cylindrical surface, when the outer periphery of the gonal nut part 4 is the outer perimeter inscribed cylindrical radial dimension, it is indicated as Rn, and when it is the outer perimeter circumscribed cylindrical radial dimension, it is indicated as Rno (in parentheses).

In the present disclosure, the gonal nut part 4 refers to the portion of the nut body 2 that, in the axial direction, extends from the release side end to the boundary 5fm with the flange part 5 of the nut body 2. In a preferred embodiment, the nut 1 can have an release side additional rigidity part 6, which will be described below, in which case the gonal nut part 4 is defined to include the release side additional rigidity part 6. Even in a standard flange nut that does not have an release side additional rigidity part, the gonal nut part 4 may have a chamfered release side end of its threaded hole 3, and in this case, the relationship between the chamfered part and the release side additional rigidity part 6 will be described later in connection with the definition of the release side additional rigidity part 6.

Flange Part

The flange part 5 of the nut body 2 is located on the axial direction fastening side of the gonal nut part 4 and has a radial dimension larger than the maximum radial dimension (outer perimeter circumscribed cylindrical radial dimension) Rno of the outer periphery of the gonal nut part 4. The flange part 5 has a bearing surface 5s which is a flat surface in the radial direction (direction perpendicular to the axis) at the fastening side end, and an outer perimeter surface (5r, 5o, 5c in the drawings) which extends from the radial direction outer side end 5so of the bearing surface 5s to the boundary 5fm between the flange part 5 and the gonal nut part 4. In the nut 1 of the present disclosure, the bearing surface 5s is located on the fastening side end and is a flat surface (plane) which extends in the radial direction (direction perpendicular to the axis). The bearing surface 5s of the nut 1 is a flat surface which comes into contact with the surface of the object to be fastened (fastening side, surface on the nut side) when fastened. A washer may be interposed at the portion of the object to be fastened that comes into contact with the bearing surface 5s. The portion of the object to be fastened that comes into contact with the bearing surface 5s of the nut 1 is a flat surface that extends in the radial direction (perpendicular to the axis) of the nut 1 or the bolt.

Depression

The nut 1 of the present disclosure has a depression 7 which is annular when viewed in the axial direction and which has a depth on the release side in the axial direction, based on the plane (bearing surface 5s and extension surface 5e of the bearing surface) present in the radial direction at the fastening side end of the flange part 5. The depression 7 is on the inner side of the bearing surface 5s (the side closer to the threaded hole) in the radial direction, and the bearing surface 5s is on the outer peripheral side of the depression 7. The depression 7 has a maximum depth Dm (hereinafter sometimes referred to simply as the "depth of the depression") in the axial direction from the extension surface 5e of the bearing surface.

According to the present disclosure, it has been discovered that when the depth Dm of the depression 7 of the nut 1 is less than 1.5 pitches, particularly 1 pitch or less, the load distribution rate of the first thread is significantly reduced as compared to a standard nut without a depression, even though the depression 7 is extremely shallow. Furthermore, it has been discovered that the load distribution rate of the first thread is more reduced as the depth Dm of the depression 7 becomes deeper up to approximately 1 pitch, but when the depth Dm of the depression 7 becomes deeper than approximately 1 pitch, the load distribution rate of the first thread increases, and when the depth Dm of the depression 7 is less than 1.5 pitches, the load distribution rate of the first thread is significantly reduced as compared to a standard nut without a depression. Furthermore, since the depth Dm of the depression 7 of the nut 1 is shallow, the degree to which the rigidity, strength, and durability of the nut 1 is reduced as a result of forming the depression 7 can be minimized, and is smaller than the corresponding reduction in rigidity, etc., in the case of forming a deep notch or recess in the manner of the prior art. In the prior art, the technology of forming a notch (recess) on the threaded hole side of the bearing surface of a nut to reduce the stress burden share of the first meshing thread was based on the idea that by interposing a notch (recess) between the bearing surface and the first meshing thread and making the depth of the notch (recess) as deep as possible beyond one thread, the stress flowing from the bearing surface to the first meshing thread can be reduced to the greatest extent possible, thereby reducing the stress burden share of the first meshing thread. However, according to the FEM analysis by the present inventors, it is not so important that the depression 7 formed on the inner side of the bearing surface of the nut be deeper than one thread, but rather that the depression 7 be spaced from the thread groove in the radial direction by a specified dimension, and when the depth of the depression 7 becomes deeper than one thread, the burden share rate of the first meshing thread actually increases. Thus, contrary to the knowledge of the prior art, the present inventors have unexpectedly discovered that the depth of the depression 7 is not as important as expected, which led to the completion of the present disclosure.

In a preferred embodiment, the depression 7 extends from the inner side end 5si of the bearing surface, and specifically, the boundary 7o between the depression 7 and the bearing surface 5s, to the threaded hole 3 on the extension surface 5e of the bearing surface, and is preferably annular when viewed in the axial direction. The depression 7 being annular means that it is preferably completely or substantially concentric, but it may be a depression which surrounds the threaded hole, is on the inner side of the bearing surface, and is continuous in the perimeter direction. Furthermore, the depression 7 preferably has a positive depth D from the extension surface 5e of the bearing surface 5s toward the release side in the axial direction (D>0) so that the entire surface of the depression 7, and specifically, the entire surface from the inner side end 5si of the bearing surface to the threaded hole 3, does not come into contact with the object to be fastened even when a specified tightening force is applied to the nut 1 in the axial direction.

In the preferred embodiment of the depression 7, the depth D of each part of the depression 7 is a positive value throughout the depression 7, but the depth is zero at the boundary 5si with the bearing surface 5s, and there is always a part from the boundary 5si to the radial direction inner side (axial side) where the depth becomes deeper linearly or non-linearly from zero, and the inner side can be any depth from that part. It is preferable that the depth D of the depression 7 be concentrically uniform from the viewpoint of stability and reliability. However, the case in which the depth D of the depression 7 is not concentric but rather displaced is not excluded. The depth D of the depression 7 may be, for example, 0.05-fold or more (D≥0.05P), 0.1-fold or more (D≥0.1P), 0.2-fold or more (D≥0.2P), or even 0.3-fold or more (D≥0.3P) the thread pitch P, except for the part adjacent to the boundary 5si with the bearing surface. In other words, excluding the portion adjacent to the boundary 7o with the bearing surface, the minimum depth D of the depression 7 is preferably, for example, 0.05-fold or more (D≥0.05P), 0.1-fold or more (D≥0.1P), 0.2-fold or more (D≥0.2P), or even 0.3-fold or more (D≥0.3P) the thread pitch P.

In the nut 1 of the present disclosure, from the viewpoint of achieving both the effect of reducing the load distribution rate of the first meshing thread (hereinafter sometimes simply referred to as the first thread) and ease of production/machining of the nut, the maximum depth Dm of the depression 7 from the extension surface 5e of the bearing surface is less than 1.5-fold the thread pitch P (Dm<1.5P). It is preferable that the maximum depth Dm of the depression 7 be 1.25-fold or less the thread pitch P (Dm≤1.25P), 1.0-fold or less of the pitch P (Dm≤1.0P), or less than 1.0-fold the pitch P (Dm<1.0P). Furthermore, from the viewpoint of further improving the ease of production/machining of the nut without losing the effect of reducing the load distribution rate of the first thread, in a preferred embodiment, the maximum depth Dm of the depression 7 may be 1.0-fold or less of the pitch P (Dm≤1.0P) or less than 1.0-fold (Dm<1.0P), 0.8-fold or less (Dm≤0.8P), 0.6-fold or less (Dm≤0.6P), and particularly 0.5-fold or less (Dm≤0.5P).

In the nut 1 of the present disclosure, the maximum depth Dm of the depression 7 may be less than 1.5-fold the thread pitch P (Dm<1.5P). Patent Literature 1 discloses providing a recess with a depth of 1 pitch or more on the bearing surface side of a coarse thread hexagonal nut, but since the hexagonal nut of Patent Literature 1 is not a flange nut, providing a recess reduces the strength and durability of the nut, and thus, the fatigue life extension effect of the nut of the present disclosure is not achieved. Conversely, the recess in the fine thread hexagonal nut of Patent Literature 1 has a depth of 1.5 pitches or more, which is different from the depression depth of the nut of the present disclosure. However, even in the nut of the present disclosure, it is preferable that the maximum depth Dm of the depression 7 be less than 1.0-fold the thread pitch P (Dm<1.0P), not only for fine threads but in particular for coarse threads.

In a preferred embodiment of the nut 1 of the present disclosure, the thread pitch P which defines the depth of the depression 7 may be the thread pitch already described in the description of the threaded hole.

Thus, it should be understood that the mechanism by which the depression 7 of the nut 1 of the present disclosure reduces the load distribution rate of the first meshing thread is essentially different from the mechanism by which the load distribution rate of the first meshing thread of the prior art is reduced. The depression 7 of the nut 1 of the present disclosure is conceptually (essentially) completely different from the deep cuts and convex spaces of the prior art.

Furthermore, what is important is that the nut 1 of the present disclosure has a shallow depression 7 and a simple shape, making it easy to produce and process the nut and without compromising the life of the production equipment and processing tools. Unlike nuts which have been previously proposed, the nut 1 of the present disclosure can easily be commercially produced, and is suitable for commercial production of nuts, making it essentially different from the prior art.

(Size of Depression)

The depression 7 preferably extends in the radial direction from the boundary 5si with the bearing surface to the threaded hole 3 and is annular when viewed from the fastening side of the nut. The depression 7 preferably has a radial direction dimension Lm from the threaded hole 3, more particularly from the thread valley cylindrical surface 3e, to the outer side end 7o of the depression 7, and specifically, the boundary 5si with the bearing surface, which is smaller than the radial direction dimension Ln from the thread valley cylindrical surface 3e of the gonal nut part 4 to the outer periphery (inscribed cylindrical surface) (Lm<Ln). This is preferable because the position of the outer side end 7o of the depression, i.e., the boundary 5si with the bearing surface, is located on the inner side in the radial direction rather than the outer periphery (inscribed cylindrical surface) of the gonal nut part 4, so that the gonal nut part 4 can receive a larger force from the bearing surface 5s toward the release side during fastening. The radial direction dimension Lm from the thread valley cylindrical surface 3e to the outer side end 7o of the depression 7 may be 0.2-fold or more (Ld≥0.2Ln), 0.3-fold or more (Ld≥0.3Ln), even 0.5-fold or more (Ld≥0.5Ln), 0.7-fold or more (Ld≥0.7Ln), 0.8-fold or more (Ld≥0.8Ln), 0.9-fold or more (Ld≥0.9Ln), or even 0.95-fold or more (Ld≥0.95Ln) based on the radial direction dimension Ln from the thread valley cylindrical surface 3e to the perimeter inscribed cylindrical surface of the gonal nut part 4. Alternatively, the radial direction dimension Lm of the depression 7 may be preferably greater than 1.0-fold the thread pitch P (1.0P<Lm), and more preferably greater than 1.5-fold (1.5P≤Lm), greater than 2.0-fold (2.0P≤Lm), or even greater than 2.5-fold (2.5P≤Lm), greater than 2.7-fold (2.7P≤Lm), greater than 2.8-fold (2.8P≤Lm), greater than 2.9-fold (2.9P≤Lm), greater than 3.0-fold (3.0P≤Lm), or greater than 3.1-fold (3.1P≤Lm). When the radial direction dimension Lm of the depression 7 is larger than a predetermined dimension, the fastening force entering the nut body 2 from the bearing surface 5s enters from a position distant from the threaded hole 3 in the radial direction and flows toward the release side from there, thereby making it possible to reduce the load distribution rate of the first meshing thread. According to the present disclosure, even if the size of the depression 7 (radial direction dimension Lm or radial dimension Rr) of the nut 1 is increased, the flange part 5 ensures the rigidity, strength, and durability of the fastening side of the nut 1. Furthermore, the maximum depth Dm of the depression 7 is shallow, such as less than 1.5 pitches, or even less than 1.0 pitch, minimizing the decrease in rigidity and the like of the fastening side portion of the nut 1 while providing the depression. As a result, the size of the depression 7, and specifically, the radial dimension Rr of the outer side end 7o of the depression 7, can be made larger than in the case of a deeper depression (recess). It is also considered that there is a synergistic effect in that the load on the threaded portion near the first meshing thread can be reduced by the amount that the radial dimension Rr of the outer side end 7o of the depression 7 can be made larger, even if the depth of the depression 7 is shallow.

In the nut longitudinal cross-section, the radial dimension Rr of the inner side end 5si of the bearing surface is preferably smaller than the outer perimeter inscribed cylindrical radial dimension Rn of the gonal nut part 4 (Rr< Rn). For example, the dimensional difference Ld=(Ln-Lm=Rn-Rr) between the radial direction dimension Lm to the outer side end 7o of the depression 7 and the radial direction dimension Ln to the outer periphery (inscribed cylindrical surface) of the gonal nut part 4 with the thread valley cylindrical surface 3e as a reference (the dimensional difference between the radial dimension Rr of the outer side end 7o of the depression 7 and the radial dimension Rn of the outer periphery (inscribed cylindrical surface) of the gonal nut part 4) may be 0.1-fold or more (Ld≥0.1Ln), 0.2-fold or more (Ld≥0.2Ln), 0.4-fold or more (Ld≥0.4Ln), or even 0.1-fold or more and 0.5-fold or less (0.1Ln≤Ld≤0.5Ln) with the radial direction dimension Ln from the thread valley cylindrical surface 3e to the perimeter inscribed cylindrical surface of the gonal nut part 4 as a reference. Alternatively, the dimensional difference Ld is preferably 0.05-fold or more (Ld≥0.05P) the thread pitch P, more preferably 0.1-fold or more (Ld≥0.1P), 0.15-fold or more (Ld≥0.15P), or 0.2-fold or more (Ld≥0.2P) the thread pitch P. It may also be 0.3-fold or more (Ld≥0.3P), 0.4-fold or more (Ld≥0.4P), 0.5-fold or more (Ld≥0.5P), 0.8-fold or more (Ld≥0.8P), or 1.0-fold or more (Ld≥1.0P) the dimensional difference Ld. In a preferred embodiment, Ld is 0.1-fold or more and 1.0-fold or less (0.1P≤Ld≤1.0P) the thread pitch P. The fastening force received by the bearing surface 5s moves from the threaded hole 3 side to the outer side in the axial direction due to the presence of the depression 7, but if there is an overlapping portion between the gonal nut part 4 and the bearing surface 5s in the radial direction, the gonal nut part 4 can also receive the fastening force flowing from the bearing surface 5s to the release side in the axial direction, and this is preferable from the viewpoint of suppressing the decrease in strength of the nut 1 due to the depression 7 and preventing brittle fracture of the nut 1 because the gonal nut part 4 has a greater dimension and strength in the axial direction than the flange part 5. The upper limit of the dimension Ld is related to the radial dimension of the gonal nut part 4 and the outer diameter dimension of the flange part 5, but can be, for example, 1.5-fold or less the thread pitch P (Ld≤1.5P), 1.0-fold or less (Ld≤1.0P), 0.5-fold or less (Ld≤0.5P), 0.3-fold or less (Ld≤0.3), 0.2-fold or less (Ld≥0.2P), or 0.1-fold or less (Ld≥0.1P) the thread pitch P.

(Shape of Depression)

In the nut longitudinal cross-section, the shape of the depression 7 may be, for example, a shape in which the depth in the axial direction (hereinafter also simply referred to as the "depth") increases from the boundary 7o, 5si between the depression 7 and the bearing surface toward the threaded hole 3 side, reaching the maximum depth Dm at the end on the threaded hole 3 side, a shape in which the maximum depth Dm is reached halfway from the boundary 7o between the depression 7 and the bearing surface toward the threaded hole 3 side and then the maximum depth Dm is maintained up to the threaded hole 3 (a radial direction straight line in the longitudinal cross-section), a shape in which the depth D decreases after reaching the maximum depth Dm halfway from the boundary 7o between the depression 7 and the bearing surface toward the threaded hole 3 side, or a shape in which there are two or more maximum depths halfway from the boundary 7o between the depression 7 and the bearing surface toward the threaded hole 3 side.

In the shapes described above, the shape of the boundary 7o side of the depression with the bearing surface may be a shape that rises vertically from the bearing surface 5 at the boundary 7o between the depression and the bearing surface, or may be a shape that rises in a straight line extending to the release side at an angle other than a right angle to the bearing surface at the boundary 7o between the depression and the bearing surface, preferably at an angle of 45° or less, more preferably at an angle of 15° or less, with respect to the axial direction. In a preferred embodiment, the shape may be a shape that rises vertically from the bearing surface 5 at the boundary 7o between the depression and the bearing surface to the axial direction and then connects to a curve (particularly a stress relaxation curve) to further increase the depth.

The shape of the depression 7 in which the depth D decreases from the maximum depth Dm of the depression 7 toward the axial side end 7i, may be a straight line, a curve (particularly a stress relaxation curve), or a combination of a curve (particularly a stress relaxation curve) and a straight line in the nut longitudinal cross-section. The nut of the present disclosure may have a shape in which the depth of the depression 7 has one or more other maximul (local mximum) depths in addition to the maximum depth Dm.

The axial side end 7i of the depression 7 has a positive depth D from the extension surface of the bearing surface 5 to the release side. In a preferred embodiment, at least the radial direction portion of the axial side end 7i of the depression 7 may be in the shape of a straight line (radial direction straight line) having the same depth in the nut longitudinal cross-section. This is particularly preferable when the depression 7 has a shape in which the depth D decreases toward the threaded hole 3 near the axial side end 7i of the threaded hole 3. The same depth may be approximately the same. The radial direction dimension of the part of the same depth in the vicinity of the axial side end 7i of the depression 7 is preferably 0.1-fold or more, more preferably 0.15-fold or more, 0.17-fold or more, or 0.19-fold or more the thread pitch P, and may extend in any dimension up to the boundary 7o between the depression 7 and the bearing surface without any upper limit, but may be 0.4-fold or less, 0.3-fold or less, or 0.25-fold or less the thread pitch P. In the nut longitudinal cross-section, the depth may increase linearly or curvedly from the boundary 7o between the depression 7 and the bearing surface, and may have a portion of the same depth immediately adjacent to the axial side end 7i of the depression 7. However, the depth of the portion of the axial side end 7i of the depression 7 immediately adjacent to the radial direction may vary to an extent that it cannot be said to be uniform, and may be a straight line inclined with respect to the radial direction.

A thread portion is present on the inner side of the axial side end 7i of the depression 7. In FIGS. 2-1 and 2-2, the thread portion is cut in the axial direction deeper than the depth Di of the axial side end 7i of the depression 7, but it need not be cut in the axial direction deeper than the depth Di, and in many cases there is an incomplete thread portion from the axial side end 7i to the complete thread portion (the depth of the beginning of the complete thread portion varies depending on the position on the circumference of the threaded hole 3). In general, as described below, since the thread portion or the portion including the thread portion is chamfered, the incomplete thread portion or the portion including the incomplete thread portion is cut deeper than the depth Di at the chamfer angle passing through the radial direction straight line 7il or the axial side end 7i of the depression 7. The depression 7 of FIG. 4 may be chamfered toward the axial center through the curved end 7ci, and the portions 7il and 7i on the inner side of the curved end 7ci may be part of the chamfered part, and the inner side may have an incomplete thread portion. In addition, the thread portion may have a straight-line shape extending in the radial direction in the nut longitudinal cross-section. When the thread portion is straight in the radial direction, the straight-line part extending in the radial direction immediately adjacent to the outer side of the axial side end 7i of the depression 7 described above may or may not be present.

The shape of the depression 7 may be composed of only straight lines, only curves (particularly stress relaxation curves), or a combination of straight line(s) and curves in the nut longitudinal cross-section, but either only curves or a combination of straight line(s) and curve(s) is preferable. Even if the shape is essentially composed of only straight lines, it is generally preferable that they comprise a stress relaxation curve though the curve may be small at the intersections between the straight lines.

Optionally, a portion of the depression 7 near the axial side end 7i, a portion on the radial inner side of the depression, and a portion forming a helical groove of the female thread may be chamfered (chamfer not illustrated). The shape of the chamfer may generally be the same as a chamfer (virtual chamfer) in a nut without a depression when the depression 7 is ignored. With reference to FIG. 5, the virtual chamfer is a straight line having an angle γ with respect to the axial direction, and the radial direction dimension from the cylindrical surface connecting the thread valley at the extension surface of the bearing surface is less than 0.5-fold, and particularly 0.4-fold or less, or 0.3-fold or less of the thread pitch P, and the angle γ is within the range of 30 to 60°, and particularly approximately 45° or approximately 60°. The chamfer may be curved rather than linear in the nut longitudinal cross-section. However, in the nut of the present disclosure, unlike the virtual chamfer shape shown in FIG. 5, since the depression 7 is present, the portion where the virtual chamfer and the depression 7 overlap is not chamfered, and only the remaining portion (if any) of the shape of the virtual chamfer except the portion overlapping with the depression 7 is chamfered. In the nut of the present disclosure, since the depression 7 is present near the threaded hole 3, chamfering may be omitted. When the depression 7 has a chamfer near the axial side end 7i, the outer peripheral side of the chamfered part may have a portion of the same depth as described above, depending on the shape of the depression, to ensure strength. When chamfered, the depth of the bearing surface of the portion forming the helical groove of the chamfered female thread from the extension surface 5e is deeper than the depression depth Di at the portion 7i where the depression 7 before chamfering intersects with the thread valley cylindrical surface 3e. The chamfered portion at the end of the axial side of the depression 7 is deeper than the depth Di of the depression at the portion 7i where the depression 7 before chamfering intersects with the thread valley cylindrical surface 3e.

In a preferred embodiment, the depression 7 may have a depth Di (Di<Dm) gradually increasing from the boundary 7o, 5si with the bearing surface towards the threaded hole 3 to a maximum depth Dm, and then gradually decreasing from the maximum depth Dm at the axial side end 7i of the depression. In this case, the shape of the depression 7 in the nut longitudinal cross-section is preferably formed by a curve (particularly a stress relaxation curve) or a combination of a curve (particularly a stress relaxation curve) and a straight line. Optionally, the depth D may initially increase perpendicularly to the bearing surface or in a straight line inclined to the axial direction, and then gradually increase by a curve or a straight line to the maximum depth Dm. In this case, it is preferable that the depth D be, for example, perpendicular or inclined at an angle of 45° or less, more preferably 15° or less, from a direction perpendicular to the bearing surface toward the axial side. In view of the strength of the depression in the vicinity of the axial side end 7i, it is preferable that the flat surface 7i1 having a certain depth Di and extending in the radial direction have a predetermined width Li (for example, approximately 0.2 pitch) in the radial direction. When the depression 7 has a depth Di at the axial side end 7i that is smaller than the maximum depth Dm, and the maximum depth Dm is at a position 7dm closer to the bearing surface 5s than to the threaded hole, it becomes more difficult for the fastening force flow from the bearing surface 5s toward the release side of the flange part 5 to flow around the first thread 3a from the portion 7dm having the maximum depth Dm, or the force transmission path from the boundary 7o, 5si with the bearing surface to the first thread of the nut/bolt is lengthened, whereby the load distribution rate of the first thread 3a can be further reduced.

The difference between the maximum depth Dm of the depression 7 and the depth Di at the axial side end 7i (Dm-Di)=Dd is greater than 0-fold and less than 1.5-fold the thread pitch P (0<Dd<1.5P), and is preferably 1.4-fold or less (0<Dd≤1.4P), and more preferably 0.1-fold or more and 1.2-fold or less, 1.0-fold or less, or less than 1.0-fold the thread pitch P (0.1≤Dd≤1.2P, 0.1≤Dd≤1.0P, or 0.1≤Dd<1.0P), or even 0.2-fold or more and 0.8-fold or less the thread pitch P (0.2P≤Dd≤0.8P). The depth Di at the axial side end 7i of the depression 7 is the depth of the portion defined above (the portion where the depression before chamfering intersects with the chamfering) when the axial side end 7i of the depression 7 is chamfered. In a preferred embodiment from the viewpoint of the production and processability of the depression 7, the dimension Dd=(Dm-Di) may be 0.2-fold or more and 0.7-fold or less (0.2≤Dd≤0.7P) or even 0.4-fold or more and 0.6-fold or less (0.2≤Dd≤0.6P) the thread pitch P.

In a preferred embodiment, the depression 7 has a portion 7dm with maximum depth Dm (or the radial outer side end of the portion with maximum depth Dm if the portion with maximum depth Dm extends in the radial direction) such that the radial direction dimension Ldm from the thread valley cylindrical surface 3e of the bolt is greater than two-fifths, preferably greater than one-half, more preferably greater than three-fifths, and further preferably greater than two-thirds of the radial direction dimension Lm from the axial side end 7i of the depression to the boundary 5si with the bearing surface. This is because, even if the depression has the same maximum depth Dm, the force flow from the bearing surface 5s toward the release side inside the flange part 5 during fastening is directed more toward the release side thread, thereby reducing the load distribution rate on the first thread of the mating thread.

The shape of the depression 7 may be composed of only straight lines in the nut longitudinal cross-section, but is preferably composed of a stress relaxation curve or a combination of straight line(s) and stress relaxation curve(s). Referring to FIG. 4 as an example, the shape of the depression 7 preferably includes, from the outer side end 7o to the inner side end 7i of the depression 7, a first straight-line part 71, preferably a first straight-line part 71 extending toward the release side perpendicularly to the bearing surface 5s or inclined at an angle of 45° or less, and more preferably 15° or less, from a direction perpendicular to the bearing surface toward the axial side, a stress relaxation curve part 7c, preferably a high-order curve part, extending from the end of the first straight-line part 71 beyond the maximum depth Dm portion 7dm, and a second straight-line part 7il extending in a substantially radial direction. It is preferable that the nut longitudinal cross-section have a first straight-line part 71 that rises from the boundary 5si with the bearing surface in the axial direction or in a direction close to it, since this can increase the effect of directing the force during fastening more toward the release side. The stress relaxation curve part 7c is preferably a higher-order curve (part thereof) such as a circular arc or an elliptical arc. An elliptical arc is particularly preferable as the stress relaxation curve part 7c, since it can be a stress relaxation curve that has a portion with maximum depth Dm closer to the inner side end 5si of the bearing surface, and is easy to produce/process.

Flange Part (cont.)

(Shape of Flange Part)

The flange part 5 is a part located on the fastening side of the gonal nut part 4 of the nut body 2, and having a radial dimension (in particular, Rfm) larger than the outer perimeter circumscribed cylindrical radial dimension Rno of the gonal nut part 4. In general, a flange part is referred to as a flange part if it has a portion in the axial direction extension of the flat side surface portion of the gonal nut part, which has a radial dimension larger than the radial dimension Rn of the flat surface portion (inscribed cylinder) of the gonal nut part. In the present disclosure, the flange part has a radial dimension that is larger than the maximum peripheral (circumscribed cylinder) radial dimension Rno of of the gonal nut part.

The flange part 5 has a bearing surface 5s which is a flat surface located at the fastening side end of the flange part 5 and extends in the radial direction, a depression 7 which extends from an inner side end 5si of the bearing surface to the threaded hole 3 and which has a depth toward the release side in the axial direction, and a flange outer periphery 5o which extends from an outer side end 5so of the bearing surface 5s to a boundary 5fm between the flange part 5 and the gonal nut part 4.

(Outer Periphery of Flange)

Since the nut 1 has the flange part 5, the flange outer periphery 5o has an outer side radial dimension (and in particular, the outermost peripheral radius Rfm) which is larger than the outer perimeter circumscribed cylindrical radial dimension Rno of the gonal nut part 4, and the outer side end 5so of the bearing surface of the nut 1 can have an outer side radial dimension Rr that is larger than the outer perimeter circumscribed cylindrical radial dimension Rno of the gonal nut part 4. Because the radial direction dimension (and in particular, Rfm) of the flange outer periphery 5o and the radial dimension Rsm of the outer side end 5so of the bearing surface are larger than the outer perimeter circumscribed cylindrical radial dimension Rno of the gonal nut part 4, it is possible to compensate for the strength of the nut fastening side portion and the area of the bearing surface 5s that are reduced due to depression 7, thereby preventing excessive concentration of force on the bearing surface 5s during fastening, preventing damage to the nut, and enabling the nut 1 to fully withstand the required fastening force.

In a preferred embodiment, in the nut longitudinal cross-section, the outer periphery 5o of the flange part 5 is composed of a flange outermost perimeter part 5om which includes the portion of the flange part 5 the radial dimension of which is the maximum radius Rfm, a stress relaxation part 5r which is composed of a stress relaxation curve connecting the flange outermost perimeter part 5om and the bearing surface 5s, and an inclined part 5c which connects the flange outermost perimeter part 5om and the gonal nut part 4.

(Height of Flange Part)

In a longitudinal cross-section view passing through the axis of the gonal nut part 4 and the outer circumscribed cylindrical part (herein also referred to as a "nut corner longitudinal cross-section"), the flange part 5 has a height (maximum height) Hfm in the axial direction from the extension surface 5e of the bearing surface at a boundary 5fm between the flange part 5, and in particular, the inclined part 5c, and the outer circumscribed cylindrical part (part of radial dimension Rn) of the gonal nut part 4. In the nut corner longitudinal cross-section, when the vicinity of the boundary is constituted by a curve, the above boundary 5fm may be considered to be an intersection 5fm between a straight line of the flange part 5, and in particular, the straight line of the inclined part 5c, and an outer circumscribed cylindrical surface (outer diameter line) of the outer periphery of the gonal nut part 4 in the nut longitudinal cross-section. In the flat portion, rather than the corner portion, of the outer periphery of the gonal nut part 4, the radial dimension is smaller than the outer perimeter circumscribed cylindrical radial dimension Rno of the gonal nut part 4, and thus, the inclined part 5c of the flange part 5 can extend further toward the axial release side than the boundary 5fm with the outer circumscribed cylindrical portion of the gonal nut part 4 (FIGS. 1(b) and 1(c)). However, the inclined part may be removed in the portion toward the axial release side from the boundary 5fm with the outer circumscribed cylindrical portion of the gonal nut part 4, and the height Hfm of the flange part 5 is the dimension in the axial direction from the extension surface 5e of the bearing surface to the intersection 5fm between the straight line of the inclined part 5c of the flange part 5 and the circumscribed cylindrical surface of the outer periphery of the gonal nut part 4. The height Hfm of the flange part 5 may be more than half the height Hz of the nut 1, as long as the nut 1 can be tightened and loosened by using a tool such as a wrench on the gonal nut part 4 on the release side of the flange part 5. However, since the height Hfm of the flange part 5 need only be able to deliver the stress received at the bearing surfaces 5s of the flange part 5 to the thread at the release end, it is preferable that the height Hfm be 0.2-fold or more ($0.2\,Hz \leq Hfm$) based on the overall length Hz, which is the height in the axial direction of the nut 1, and is more preferably 0.25-fold or more ($0.25Hz \leq Hfm$), and further preferably 0.3-fold or more ($0.3Hz \leq Hfm$). For example, the height Hfm may be 2-fold or more of the thread pitch P ($2P \leq Hfm$), and is preferably 2.2-fold or more ($2.2P \leq Hfm$), more preferably 2.4-fold or more ($2.4P \leq Hfm$), and further preferably 2.6-fold or more ($2.6 \leq Hfm$) or 2.7-fold or more ($2.7 \leq Hfm$) the thread pitch P. The height Hfm of the flange part 5 is preferably 0.6-fold or less ($Hfm \leq 0.6\,Hz$) based on the overall length Hz of the nut 1, and may be 0.5-fold or less ($Hfm \leq 0.5\,Hz$), 0.45-fold or less ($Hfm \leq 0.45Hz$), or 0.4-fold or less ($Hfm \leq 0.4\,Hz$), and may be, for example, 6-fold or less ($Hfm \leq 6P$) of the thread pitch P, more preferably 4-fold or less ($Hfm \leq 4P$), 3.5-fold or less ($Hfm \leq 3.5P$), or further 3.2-fold or less ($Hfm \leq 3.2P$), or 3.0-fold or less ($Hfm \leq 3.0P$). Since the height Hfm of the flange part 5 has a predetermined size, the upward fastening force received by the bearing surface 5s can be guided in a direction closer to the axial direction (vertical), and specifically, farther toward the release side (toward the threads of the release side of the gonal nut part), whereby the load distribution rate on the first thread of the mating thread can be reduced.

(Flange Outermost Perimeter Part)

The flange outermost perimeter part 5om is a part having the maximum radial dimension Rfm in the nut body 2 and the flange part 5, and is preferably constituted by a straight line extending in the axis Z direction in the nut longitudinal cross-section. However, in the nut longitudinal cross-section, the flange outermost perimeter part 5om may be a curved line convex to the outer peripheral side, and in this case, the part having the maximum radial dimension Rfm may be a point. In the case where the flange outermost perimeter part 5om is connected to the inclined part 5c by a curve in the nut longitudinal cross-section, the intersection 5m between the straight line in the axial direction representing the maximum radial dimension Rfm of the flange outermost perimeter part 5om and the extension line of the straight line of the inclined part 5c may be considered as the boundary between the flange outermost perimeter part 5om and the inclined part 5c. The height Hf of the flange outermost perimeter part 5om is the height of this boundary.

The radial dimension Rfm of the flange outermost perimeter part 5om is larger than the circumscribed cylindrical radial dimension Rno of the outer periphery of the gonal nut part 4, and preferably the difference Lfd between the dimension Rfm and the circumscribed cylindrical radial dimension Rn of the outer periphery of the gonal nut part 4 (Rfm-Rn) is 0.4-fold or more (Lfd≥0.4Ln), preferably 0.45-fold or more (Lfd≥0.45Ln), and more preferably 0.5-fold or more (Lfd≥0.5Ln) based on the radial direction dimension Ln from the thread valley cylindrical surface 3e to the perimeter inscribed cylindrical surface of the gonal nut part 4. Alternatively, the dimensional difference Lfd may be 1.8-fold or more of the thread pitch P (Lfd≥1.8P), more preferably 2.0-fold or more (Lfd≥2.0P), 2.1-fold or more (Lfd≥2.1P), or 2.3-fold or more (Lfd≥2.3P), and may be 2.5-fold or more [Lfd=(Rfm-Rn)≥2.5P]. When the radial dimension Rfm of the flange outermost perimeter part (5om) is large, even if the nut 1 has a depression 7, the force received by the bearing surface (5s) during fastening can be received by the portion equivalent to the flange outermost perimeter part (5om), which has a large cross-sectional area. This improves the strength, durability, and lifespan of the nut 1, which are reduced due to the depression 7, prevents destruction of the nut, and extends its life. The upper limit of the dimension Lfd is not limited, and may be, for example, 3.5-fold or less (Lfd≤3.5P), 3.0-fold or less (Lfd≤3.0P), or 2.5-fold or less (Lfd≤2.5P) the thread pitch P.

When the nut 1 has a depression 7 at the fastening side end thereof, the portion of the fastening side end of the nut 1 that can receive a fastening force is reduced due to the depression 7, but by including the flange part, the rigidity, strength, and durability of the portion of the fastening side end of nut 1 for receiving the fastening force can be secured, and the nut 1 can maintain its rigidity, strength, and durability even though the depression 7 is included. As an index representing the rigidity, strength, and durability of the fastening side (flange part 5) of nut 1 including the depression 7, the area Sm (=S3-S2) obtained by subtracting the axial side area S2 having the axial side end 5si of the bearing surface as an outer edge from the axial side area S3 having the flange outermost perimeter part 5om of the flange part 5 of the nut 1 as an outer edge when viewing the nut from the axial direction Z can be considered. With reference to FIG. 2-1, in a typical example in which the flange outermost perimeter part 5om and the outer peripheral side end 7o of the depression are both circular, the area S3 is the area of a circle having an outer periphery which is the flange outermost perimeter part 5om, and specifically, the area of the circle of the radial dimension Rfm, and S2 is the area of a circle having an outer periphery which is the outer peripheral side end 7o of the depression (the boundary between the depression and the bearing surface), and specifically, the area of the circle of the radial dimension Rr. The area Sm is the area of the annular portion (the portion in the radial direction dimension Ls+Lr) having an inner edge which is the axial side end 5si of the bearing surface and having an outer edge which is the flange outermost perimeter part 5om. Conversely, in a conventional gonal nut having neither a flange part nor a depression, the area serving as a comparison standard corresponding to the area Sm is the area Ss=(Sn-S0) obtained by subtracting the area S0 of a circle having a radius equal to the radial dimension R0 of the thread valley 3b from the area Sn of a circle having a radius equal to the outer perimeter inscribed cylindrical radial dimension Rn of the gonal nut part 4. In the nut 1 of the present disclosure, the area Sm is preferably 0.55-fold or more of the area Ss (Sm≥0.55Ss), and further may be 0.6-fold or more of the area Ss (Sm≥0.6Ss), 0.65-fold or more (Sm≥0.65Ss), 0.7-fold or more (Sm≥0.7Ss), 0.75-fold or more (Sm≥0.75Ss), 0.8-fold or more (Sm≥0.8Ss), 0.9-fold or more (Sm≥0.9Ss), or 1.0-fold or more (Sm≥1.0Ss). The upper limit of the area Sm is not particularly limited, and may be 1.5-fold or less the area Ss (Sm≤1.5Ss), 1.3-fold or less (Sm≤1.3Ss), 1.2-fold or less (Sm≤1.2Ss), 1.1-fold or less (Sm≤1.1Ss), 1.0-fold or less (Sm≤1.0Ss), 0.9-fold or less (Sm≤0.9Ss), or 0.8-fold or less (S≤0.8Ss). In a gonal nut without a flange part, if a notch (recess) is provided in the bearing surface to reduce the stress applied to the first meshing thread, it is desirable to make the outer side end of the notch (recess) as distant as possible from the thread groove in the radial direction in order to make the effect of the recess effective, but this reduces the rigidity of the fastening side of the nut accordingly, making it unable to withstand the necessary fastening force and making it prone to buckling. In contrast, the nut 1 of the present disclosure has the flange part 5, which allows the radial direction dimension Lm of the depression 7 to be the size required to sufficiently reduce the stress applied to the first meshing thread, while still allowing the nut 1 to have a sufficient flange part area Sm and furthermore the area S of the bearing surface 5s, ensuring the rigidity and durability of the nut 1.

When the flange part 5 has a stress relaxation part 5r at the fastening side end thereof, the area S of the bearing surface is reduced by an amount corresponding to the stress relaxation part 5r, but since the fastening stress received by the bearing surface 5s is propagated by detouring to the flange outermost perimeter part 5om or the stress relaxation part 5r on the outer peripheral side of the bearing surface 5s, even when the flange part has a stress relaxation part 5r, the dimensions of the flange outermost perimeter part 5om are still important for the rigidity, etc., of the flange part. Furthermore, even in the conventional gonal nut, which is the comparison standard, since a stress relaxation part is usually provided on the outer peripheral side of the bearing surface of the nut, the area Ss is appropriate as the comparison standard when considering the area Sm, regardless of whether the nut has a stress relaxation part or not. The area S of the bearing surface 5s assuming that the flange part 5 has a stress relaxation part 5r will be described later.

In the nut 1 of the present disclosure, since the depth Dm of the depression 7 is shallow, the reduction in the rigidity, strength, and durability of the nut body 2, and in particular, the fastening side portion, due to the formation of the depression 7 can be minimized, and as a result, the size of the flange part 5, and in particular, the flange outermost perimeter part 5om, which is added to compensate for the reduction in the rigidity of the nut body 2, can also be minimized. In the nut having a deep notch or recess of the prior art, in order to compensate for the large reduction in the rigidity of the nut body due to the formation of the deep notch or recess, the rigidity of the structure of the legs and other parts provided on the outer peripheral side of the deep recess or recess must also be large, and the shape of the structure of the deep notch or recess and the legs and other parts on the outer peripheral side must be large and complex, which leads to problems such as difficulty in processing, increased production costs, and reduced practicality. The flange part 5 of the nut 1 of the present disclosure can be a simple flange part, and need not be a structure like the large and complex legs of the prior art.

(Shoulder Height of Flange Part)

The flange outermost perimeter part 5om has a height Hf, which is an axial direction dimension from the extension surface 5e of the bearing surface, at the boundary 5m between the flange outermost perimeter part 5om and the inclined part 5c, in the nut longitudinal cross-section. In the following disclosure, unless otherwise specified, "height" refers to the axial direction dimension from the bearing surface 5s or the extension surface 5e of the bearing surface. Since the boundary 5m between the flange outermost perimeter part 5om and the inclined part 5c is generally curved, it may be considered to be the intersection of a straight line in the axial direction having the maximum diameter Rfm of the flange outermost perimeter part 5om and an extension line of the straight line of the inclined part 5c. There is no reason not to include the straight-line part in the inclined part 5c, but if it is an S-shaped curve, a straight line (the most approximate straight line) representing the inclination of the entire curve may be calculated, and the straight line may be used as the inclination of the inclined part 5c. In a preferred embodiment, the height Hf of the flange outermost perimeter part 5o (flange shoulder height) is greater than the maximum depth Dm of the depression 7 (Hf>Dm), and the shoulder height Hf of the flange part is preferably 1.1-fold or more (Hf≥1.1Dm), more preferably 1.5-fold or more (Hf≥1.5Dm), and further preferably 1.8-fold or more (Hf≥1.8Dm) based on the maximum depth Dm of the depression (7), or alternatively, is preferably 1.2-fold or more (Hf≥1.2P), more preferably 1.3-fold or more (Hf>1.3P), 1.4-fold or more (Hf≥1.4P), and further preferably 1.44-fold or more (Hf≥1.44P), 1.5-fold or more (Hf≥1.5P), or 1.6-fold or more (Hf≥1.6P) the thread pitch P. By setting the height Hf of the flange outermost perimeter part (5 om) to a predetermined size, it becomes possible for the flange part 5 to receive the fastening force at a higher position on the outer side than the depression 7 during fastening. The upper limit of the height of the flange outermost perimeter part 5om (flange shoulder height) Hf is not limited, and may be, for example, 3.0-fold or less (Lfd≤3.0P), 2.5-fold or less (Lfd≤2.5P), or 2.0-fold or less (Lfd≤2.0P) the thread pitch P.

In the nut 1 of the present disclosure, since the depth Dm of the depression 7 is shallow, the reduction in the rigidity, strength, and durability of the nut body 2 caused by forming the depression 7 can be minimized. Furthermore, since the depth Dm of the depression 7 is shallow, it is clear that the shoulder height Hf of the flange part 5 added to compensate for the reduction in the rigidity, etc., of the nut body 2 can also be correspondingly minimized. Furthermore, in the nut 1 of the present disclosure, since the depth Dm of the depression 7 is extremely shallow, the nut body 2 including the depression 7 has a shape and structure that is substantially the same as the case in which no depression 7 is provided, and the stress propagating from the bearing surface 5s having the flange part 5 to the shaft side and the thread groove side also reaches the robust shaft part of the nut body on the released side of the shallow depression 7 at the closest distance, and thus, the structure of the part on the outer peripheral side of the depression 7 of the flange part 5 need not be a large and complex rigid structure in the manner of the legs disclosed in the prior art, and in this sense, the structure of the flange part 5 can be simple and the shoulder height Hf can be kept to a minimum.

(Stress Relaxation Part of Flange Part)

The portion connecting the bearing surface 5s of the flange part 5 and the flange outermost perimeter part 5om may be a straight line extending in the axial direction in the nut longitudinal cross-section, but is preferably a stress relaxation part 5r constituted by a part of a stress relaxation curve, typically an arc, an ellipse, or a high-order curve. Though the boundary of the stress relaxation part 5r on the bearing surface 5s side is a portion that contacts the bearing surface 5s, the boundary on the flange outermost perimeter part 5om side may be a portion where the radial direction dimension of the stress relaxation part 5r reaches the maximum radial dimension Rfm. When the stress relaxation part 5r of the flange part 5, and specifically, the portion where the outer periphery of the flange part 5 contacts the bearing surface 5s, is constituted by a stress relaxation surface, it is possible to prevent the flange part 5 from sinking into the object to be fastened during fastening, resulting in insufficient fastening force, if the outermost periphery of the bearing surface 5s of the flange part 5 is not a stress relaxation surface. Furthermore, due to the presence of this stress relaxation curve, the fastened member is not damaged even when it vibrates up and down (in the axial direction), whereby aggressiveness to the fastened member can be reduced. The radial direction dimension (Rfm-Rsm)=Lr of the stress relaxation curve from the outer side end 5so of the bearing surface to the flange outermost perimeter part 5om is preferably, for example, 0.15-fold or more (Lr≥0.15Ln) relative to the radial direction dimension Ln from the thread valley cylindrical surface 3e of the gonal nut part 4 to the perimeter inscribed cylindrical surface, and is more preferably 0.2-fold or more (Lr≥0.2Ln) or 0.25-fold or more (Lr≥0.25Ln). Alternatively, the radial direction dimension Lr may be 0.5-fold or more (Lr≥0.5P) the pitch P, but is preferably 0.7-fold or more (Lr≥0.7P), 0.8-fold or more (Lr≥0.8P), 0.9-fold or more, 0.95-fold or more (Lr≥0.95P), or 1.0-fold or more (Lr ≥1.0P ) the pitch P. The dimension Lr is preferably 1.1-fold or less (Lr≤1.1P) the thread pitch P, and may be 1.0-fold or less (Lr≤1.0P), 0.95-fold or less (Lr≤0.95P), or 0.9-fold or less (Lr≤0.9P).

(Inclined Part)

In a preferred embodiment, the flange part 5 has an inclined part 5c connecting the flange outermost perimeter part 5om and the gonal nut part 4. The inclined part 5c of the flange part 5 has an angle θ with respect to the radial direction at the nut longitudinal cross-section. The angle θ is not particularly limited, and may be, for example, 10° to 60° (10°≤θ≤60°), preferably 15° to 45° (15°≤θ≤45°), more preferably 20° to 40° (20°≤θ≤40°), further preferably 25° to 35° (25°≤θ≤35°), and particularly preferably greater than 25° to 35° (25°<θ≤35°). In the nut longitudinal cross-section, the angle θ of the inclined part 5c of the flange part 5 is the angle that the straight line of the inclined part 5c makes with respect to the radial direction, starting from the intersection 5m of the straight line of the inclined part 5c and the straight line 5mo of the axial direction representing the maximum radial dimension Rfm of the flange outermost perimeter part 5om, which will be described later. When the inclined part 5c of the flange part 5 has such an angle θ, it is preferable in terms of reducing the load distribution rate of the first meshing thread. When the inclined part 5c of the flange part 5 has such an angle θ, and in particular, when the angle θ is large, the flow of the fastening force flowing from the bearing surface 5s to the release side can be sent farther from the release side, so that it is considered that the load distribution rate of the first meshing thread can be further reduced.

(Bearing Surface)

The bearing surface 5s is a flat surface (plane) that is located at the fastening side end of the nut body 2 and the flange part 5 and extends in the radial direction. In the nut 1 of the present disclosure, the outer side end 5so of the bearing surface 5s is the boundary between the bearing surface 5s and the flange outer periphery 5o, and the inner side end 5si of the bearing surface 5s is the boundary between the bearing surface 5s and the depression 7. In a preferred embodiment, since the flange outer periphery 5o has a stress relaxation part 5r in the boundary region with the bearing surface 5s, the outer side end 5so of the bearing surface 5s is the boundary 5so between the bearing surface 5s and the stress relaxation part 5r.

In a preferred embodiment, the bearing surface 5s may be an annular plane having the boundary 5si with the annular depression 7 as its inner circumference and the radial direction outer side end 5so of the bearing surface 5s as its outer circumference. The outer side radial dimension Rr of the bearing surface 5s is the inner side end 5si of the bearing surface 5s, and specifically, the radial dimension of the boundary between the bearing surface 5s and the depression 7, and is also the radial dimension of the outer side end 7o of the depression 7. The outer side radial dimension Rr of the depression 7 has a relationship of Rr=(R0+Lm), where R0 is the threaded hole radius, which is the radial dimension of the thread valley cylindrical surface 3e, and Lm is the radial direction dimension from the thread valley cylindrical surface 3e to the outer side end 7o of the depression 7. As described above, the outer side radial direction dimension Lm of the depression 7 is preferably larger than 1.0-fold the thread pitch P (1.0P<Lm), and the radial direction dimension Lm is smaller than the radial direction dimension Ln from the thread valley cylindrical surface (3e) to the perimeter inscribed cylindrical surface of the gonal nut part (4) (Lm<Ln). More preferably, the radial direction dimension Lm is 1.5-fold or more the thread pitch P (1.5P≤Lm), and more preferably 2.0-fold or more (2.0P≤Lm), 2.5-fold or more (2.5P≤Lm), 2.8-fold or more (2.8P≤Lm), or alternatively, the radial direction dimension Lm is 0.5-fold or more (Lm≥0.5Ln), 0.7-fold or more (Lm≥0.7Ln), 0.8-fold or more (Lm≥0.8Ln), or 0.9-fold or more (Lm≥0.9Ln) based on the radial direction dimension Ln.

The outer side radial dimension of the bearing surface (5s) may be considered to coincide with the outer side radial dimension (particularly Rfm) of the flange outer periphery 5o when there is no stress relaxation part 5r or the dimensions thereof are small. However, in a preferred embodiment, the outer side radial dimension of the bearing surface 5s is the radial dimension Rsm of the boundary 5so between the bearing surface 5s and the stress relaxation part 5r, and specifically, the dimension Rsm obtained by subtracting the radial direction dimension Lr of the stress relaxation part 5r from the radial dimension Rfm of the outermost periphery of the flange part 5. In this case, it is preferable that the outer side radial dimension Rsm of the bearing surface 5s be larger than the radial dimension Rn of the gonal nut part 4. More preferably, the dimensional difference Lsd between the outer side radial dimension Rsm of the bearing surface 5s and the radial dimension Rn of the gonal nut part 4 is 0.5-fold or more (Lsd≥0.5P), 0.7-fold or more (Lsd≥0.7P), and further preferably 0.8-fold or more (Lsd≥0.8P) the thread pitch P. This is to ensure that the flow of the fastening force received by the bearing surface 5s and directed toward the release side is firmly received by the flange part 5 on the axial direction release side of the bearing surface 5s.

The radial direction dimension Ls of the bearing surface 5s from the outer side end 5so to the inner side end 5si in the radial direction of the bearing surface 5s is 0.3-fold or more (Ls≥0.3Ln) based on the radial direction dimension Ln from the thread valley cylindrical surface (3e) to the perimeter inscribed cylindrical surface of the gonal nut part (4), and may be preferably 0.4-fold or more (Ls≥0.4Ln), and further may be 0.45-fold or more (Ls≥0.45Ln). Alternatively, the radial direction dimension Ls of the bearing surface 5s is preferably 1.0-fold or more (Ls≥1.0P) the thread pitch P, and may be 1.2-fold or more (Ls≥1.2P), or further preferably 1.5-fold or more (Ls≥1.5P), 1.7-fold or more (Ls≥1.7P), or 1.8-fold or more (Ls≥1.8P). Though the bearing surface 5s that should receive the fastening force at the fastening side end of the nut 1 is reduced due to the depression 7, since the nut 1 has a flange part, it is preferable that the radial direction dimension Ls of the bearing surface 5s be within the above range because the strength of the portion of the bearing surface 5s that receives the fastening force can be maintained. The radial direction dimension Ls of the bearing surface 5s is preferably 4.0-fold or less (Ls≤4.0P) the thread pitch P, and may be 3.0-fold or less (Ls≤3.0P), 2.5-fold or less (Ls≤2.5P), or further preferably 2.0-fold or less (Ls≤2.0P). Since the nut 1 of the present disclosure has the flange part 5, the size and area of the bearing surface (5s) can be set to the required size and area.

For the same reason, as has already been described, when viewing the nut in the axial direction Z, the area Sm (=S3-S2) obtained by subtracting the area S2 on the axial side having the axial side end 5si of the bearing surface as an outer edge from the area S3 on the axial side having the flange outermost perimeter part 5om of the flange part 5 of the nut 1 as an outer edge is preferably a predetermined size based on the area Ss corresponding to the above-described area Sm of a conventional nut having no flange part, and in other words, the area Ss=(Sn-S0) obtained by subtracting the area S0 of a circle having a radius the outer perimeter inscribed cylindrical radial dimension Rn of the gonal nut part 4 from the area Sn of the circle having a radius the radial dimension R0 of the thread valley 3b.

For the same reason, the area S of the bearing surface 5s of the nut 1 of the present disclosure is preferably 0.55-fold or more (S≥0.55Ss) or 0.6-fold or more (S≥0.6Ss) the area Ss of the bearing surface 5s of the gonal nut that does not have a flange part, and specifically, the area Sn of a circle having a radius which is the radial dimension Rn of the inscribed cylinder on the outer periphery of the gonal nut part 4 minus the area S0 of a circle whose radius is the radial dimension R0 of the thread valley (3b), and the area S may further be 0.65-fold or more (S≥0.65Ss), 0.7-fold or more (S≥0.7Ss), 0.75-fold or more (S≥0.75Ss), 0.8-fold or more (S≥0.8Ss), 0.9-fold or more (S≥0.9Ss), or 1.0-fold or more (S≥1.0Ss). The area S of the bearing surface (5s) may be 1.5-fold or less (S≤1.5Ss), 1.3-fold or less (S≤1.3Ss), 1.2-fold or less (S≤1.2Ss), 1.1-fold or less (S≤1.1Ss), 1.0-fold or less (S≤1.0Ss), 0.9-fold or less (S≤0.9Ss), or 0.8-fold or less (S≤0.8Ss). The area S of the bearing surface 5s of the nut 1 may be measured by measuring the area of the bearing surface 5s, but in the case of a typical annular bearing surface, it is the area of the annular part obtained by subtracting the area S2 of a circle having a radius of the dimension Rr from the axis to the axial side end 5si of the bearing surface 5s, from the area S1 of a circle having a radius of the dimension Rsm from the axis to the outer peripheral side end 5so of the bearing surface 5s. When the flange part 5 has a stress relaxation part 5r, the area S of the bearing surface 5s excludes the cross-sectional area of the stress relaxation part 5r, but even in conventional nuts that do not have a flange part, a stress relaxation part is usually provided, and the area of the bearing surface of the conventional nut is smaller than the reference area Ss. However, since the dimensions of the stress relaxation part of the conventional nut are not uniform, the above area Ss is used as the comparison standard for the area S of the bearing surface instead of the area of the bearing surface of the conventional nut. Furthermore, since the fastening stress received by the bearing surface 5s also flows around to the stress relaxation part 5r on the outer side of the bearing surface 5s, the presence of the stress relaxation part 5r contributes to improving the rigidity, strength, and durability of the flange part 5. From this, it should be noted that in a conventional nut 1 in which the flange part 5 has the stress relaxation part 5r, the flange part 5 contributes substantially to ensuring the rigidity, strength, and durability of the nut 1 more than the numerical value of the area S of the bearing surface 5s described above. In a gonal nut that does not have a flange part, if a recess is provided in the bearing surface to reduce the stress applied to the first meshing thread, in order to make the above-described effect of the recess effective, it is necessary to place the outer side end of the recess as far away from the thread as possible, but this causes the area of the bearing surface of the nut to decrease rapidly, making it unable to receive the necessary fastening force and making the nut prone to buckling. In contrast to this, the nut 1 of the present disclosure has the flange part 5, which allows the radial direction dimension Lm of the depression 7 to be the size required to sufficiently reduce the stress applied to the first meshing thread, while still allowing the nut 1 to have a sufficient bearing surface area S, thereby ensuring the rigidity and durability of the nut 1. Furthermore, since the depth Dm of the depression 7 of the nut 1 of the present disclosure is shallow, the reduction in the rigidity, etc., of the nut body 2 is kept to a minimum, and the fastening stress is immediately propagated from the bearing surface 5s to the robust shaft side on the release side of the shallow depression 7 of the nut body 2, whereby the size of the flange part 5 and the area S of the bearing surface 5s can be smaller than expected.

Release Side Additional Rigidity Part

In a preferred embodiment, the nut 1 of the present disclosure has an release side additional rigidity part 6 at the release side end of the nut body 2, and the radial direction inner side surface (axial side surface; 6is) of the release side additional rigidity part 6 has a radial dimension R1 larger than the radial dimension R0 of the thread valley cylindrical surface 3e, and the axial direction dimension Ha of the release side additional rigidity part 6 is 0.5-fold or more the thread pitch P (Ha≥0.5P). The release side additional rigidity part 6 is the part represented by hatching and dots in FIGS. 2-1 and 2-3.

The present inventors have discovered that when the nut 1 has an release side additional rigidity part 6, the load distribution rate of the first meshing thread can be reduced more than when the nut 1 does not have the release side additional rigidity part 6. When the additional rigidity part 6 is provided on the release side, the thread on the release side end side can more firmly receive the fastening force from the bearing surface (5s) than when the nut 1 does not have the release side additional rigidity part 6. This increases the load distribution rate of the release side thread and reduces the load distribution rate of the first thread of the mating thread.

An example of the nut 1 of the present disclosure having an release side additional rigidity part 6 will be described with reference to FIG. 2-3. FIG. 2-3 is a partially enlarged longitudinal cross-sectional view of the axial direction release side and radial direction axial side of the nut body 2 or the gonal nut part 4. In FIG. 2-3, the gonal nut part 4 has an release side end surface 6s extending in the radial direction at the release side end, and a radial direction inner side surface 6is on the radial direction inner side facing the threaded hole 3. The inner side surface 6is of the gonal nut part 4 may be composed of, in the nut longitudinal cross-section, from the fastening side in the axial direction to the release side, in that order, an inclined straight-line part A1, which is a straight line inclined with respect to the axial direction, a first curved portion A2, which is a convex curve on the upper left side (nut body side) of FIG. 2-3, a horizontal straight-line part A3, which is a straight line extending in the axial direction, and a second straight line or curved portion A4, having radial dimension which expands toward the release side of the release side end of the horizontal straight-line part A3. In this manner, in the nut longitudinal cross-section, the inner side surface 6is of the part of the axial direction release side and radial direction axial side of the gonal nut part 4 is preferably composed as a stress relief line comprising straight lines and curved lines. FIG. 2-3 does not limit the present disclosure, and for example, the inclined straight-line part A1, the horizontal straight-line part A3, and the second straight line or curved portion A4 may not be present. The shape of the first curved line portion A2 is arbitrary. The second straight line or curved line portion A4 may be a straight line or a curved line, or may be a combination of a curved line and an inclined straight line.

FIG. 2-3 is merely exemplary and are not limiting, but since the fastening side end 6ii of the portion where the radial dimension R1 is larger than the thread valley radial dimension R0 is near the boundary between the inclined straight-line part A1 and the first curved portion A2, the portion where the radial dimension R1 is smaller than the thread valley radial dimension R0 is the inclined straight-line part A1, and the portion where the radial dimension R1 is larger than the thread valley radial dimension R0 is the first curved portion A2, the horizontal straight-line part A3, and the second straight line or curved portion A4.

However, the fastening side end 6ii of the release side additional rigidity part 6 in which the radial dimension R1 is larger than the thread valley radial dimension R0 may be in the inclined straight-line part A1 or the first curved line part A2. It may also be in the second straight line or curved line part A4. Of the part in which the radial dimension R1 is larger than the half radial dimension R0 of the thread valley, the position in which the axial direction dimension from the fastening side is 0.5-fold the thread pitch P is preferably in the first curved line part A2 or the horizontal straight-line part A3, but may be in the inclined straight-line part A1 or the second straight line or curved line part A4.

The release side additional rigidity part 6 may have a dimension Ha in the axial direction that is 0.5-fold or more the thread pitch P (Ha≥0.5P), more preferably greater than 0.5-fold (Ha>0.5P), 0.6-fold or more (Ha≥0.6P), 0.7-fold or more (Ha≥0.7P), and further preferably 0.8-fold or more (Ha≥0.8P), or 0.9-fold or more (Ha≥0.9P). When the dimension Ha in the axial direction of the release side additional rigidity part 6 is larger than a predetermined dimension, it has the effect of further reducing the load distribution rate of the first engagement thread.

The dimension Ha in the axial direction of the release side additional rigidity part 6 may be 2.0-fold or less (Ha≤2.0P), 1.5-fold or less (Ha≤1.5P), or further preferably 1.0-fold or less (Ha≤1.0 P) the thread pitch P. Since the above of the release side additional rigidity part 6 described above increases as the dimension Ha in the axial direction increases, there is no theoretical upper limit. However, since the effect described above gradually saturates, the upper limit may be determined in relation to the practical dimension of the nut (nut height).

In the nut longitudinal cross-section, the radial dimension R2 of the horizontal straight-line part A3 of the release side additional rigidity part 6 may be larger than the thread valley radius R0 to avoid contact with the bolt, but the dimensional difference Lad=(R2−R0) from the thread valley radius R0 is preferably 0.1-fold or more (Lad≥0.1P) the thread pitch P, and more preferably 0.2-fold or more (Lad≥0.1P) the thread pitch P. The dimensional difference Lad is preferably 0.3-fold or less (Lad≤0.3P) the thread pitch P, and more preferably 0.2-fold or less (Lad≤0.1P) the thread pitch P. When the radial dimension of the inner side surface of the release side additional rigidity part 6 is in such a range, it is preferable for the effect of the release side additional rigidity part 6 (reduction of the load distribution rate of the first engagement thread).

The inclination angle β of the inclined straight-line part A1 may be approximately 40° to 70°, approximately 45° to 60°, and particularly approximately 45°, based on the axis in the nut longitudinal cross-section. The inclined straight-line part A1 may be only a part whose radial dimension R1 is smaller than the thread valley radius R0 as shown in FIG. 2-3, but may also include a part whose radial dimension R1 is larger than the thread valley radius R0. The part of the inclined straight-line part A1 whose radial dimension R1 is smaller than the thread valley radius R0 generally extends from the radial dimension of the thread valley to the radial dimension of the thread ridge depending on the perimeter position. The axial direction dimension B of the part of the inclined straight-line part A1 having a radial dimension R1 which is smaller than the thread valley radius R0 is arbitrary, but is usually approximately 0.5-fold the thread pitch P.

The first curved portion A2 may be a stress relaxation curve connecting the inclined straight-line part A1 and the horizontal straight-line part A3, and may be, for example, a circular arc or an elliptical arc, and its axial direction dimension Hai may be a dimension that depends on the curve when connecting the specific inclined straight-line part A1 and the horizontal straight-line part A3 with a natural stress relaxation curve. When the curvature of the first curved portion A2 is excessively large (the radius of curvature is excessively small), the radial dimension R2 of the horizontal straight-line part A3 cannot be large, but if the curvature is excessively small, the radial dimension R2 of the horizontal straight-line part A3 becomes larger than necessary, and thus, it is only necessary to take these factors into consideration when determining the curvature. The inclined straight-line part A1 generally rises at a large angle of approximately 45° to 60° with respect to the axial direction, so even if the curvature is relatively small, it can be connected to the horizontal straight-line part A3 as a stress relaxation curve.

The second straight line or curved portion A4 need only make the intersection between the inner side surface 6is of the release side additional rigidity part 6 and the release side end surface 6s curved rather than being a corner or an acute angle, and need not have a small curvature (large radius of curvature).

When the nut 1 of the present disclosure has an release side additional rigidity part 6, the height (total height) Hz of the nut 1, and specifically, the dimension in the axial direction of the nut 1 (the dimension from the fastening side end face to the release side end face), may be the height of the nut specified in the standards. The standards may be JIS, ISO, EN, etc., and in particular, JIS standards. Since the standards specify the relationship between the threaded hole diameter of the nut and the nut height, the height of the nut is determined when the threaded hole diameter of the nut is determined.

In a preferred embodiment, the height (total height) Hz of the nut 1 of the present disclosure is greater than the height of the nut specified in the standards. It is preferable that the nut 1 have a nut height greater than the height of the nut specified in the standards and have the above-defined release side additional rigidity part 6. When the nut 1 has a nut height greater than the standard and has the release side additional rigidity part 6, the above-described effect of the release side additional rigidity part 6, and specifically, the flow of the fastening force acts to flow to the release side that has no thread groove near the release side end, contributing to reducing the burden share of the first meshing thread, and increasing the number of threads of the nut, also contributes to reducing the burden share of the first meshing thread. The difference Hd=(Hz-Hzs) between the height Hz of the nut 1 and the height of the nut Hzs defined in the standards may be a positive value (Hd>0), or may be 0.1-fold or more (Hd≥0.1P) or 0.3-fold or more (Hd≥0.3P) the thread pitch P, and preferably 0.5-fold or more (Hd≥0.5P), 0.6-fold or more (Hd≥0.6P), 0.7-fold or more (Hd≥0.7P), or further preferably 0.8-fold or more (Hd≥0.8P), or 0.9-fold or more (Hd≥0.9P) the thread pitch P.

(Reduced Diameter Part)

The present inventors have also discovered that in a preferred embodiment, the nut body 2 can have a reduced diameter part 8 at the release side end, in which the radial dimension R3 of the radial direction outer side (outer perimeter surface) is smaller than the inscribed cylindrical radial dimension Rn of the outer periphery of the gonal nut part 4, regardless of whether or not the nut body 2 has an release side additional rigidity part 6, and in particular, when the nut body 2 has an release side additional rigidity part 6 (R3<Rn). In other words, the shape of the radial direction outer side surface (outer perimeter surface) of the gonal nut part 4 corresponding to the release side additional rigidity part 6 can be smaller than the inscribed cylindrical radial dimension Rn of the outer periphery of the gonal nut part 4 in the nut longitudinal cross-section, and can be constituted by a stress relaxation curve in particular in the nut longitudinal cross-section. This has the effect of solving problems such as safety when the release side outer periphery of the nut is an acute angle, etc.

The shape of the outer peripheral side of reduced diameter part 8 at the release side end of gonal nut part 4 may be a stress relaxation shape in a cross-sectional view of the nut, such as a stress relaxation curve or a combination of a stress relaxation curve and a straight line, but may simply be an arc shape.

The dimension Hc in the axial direction of the reduced diameter part 8 may be, for example, 2.5 pitch or less, 2.0 pitch or less, or 1.0 pitch or less of the gonal nut part 4, and may be 0.5 pitch or more, 1.0 pitch or more, 1.2 pitch or more, or 1.5 pitch or more. Since the reduced diameter part 8 reduces the axial direction dimension of the flat part of the outer periphery of the hexagonalal nut part 4, the area of the engagement part when tightening the nut with a wrench or the like is reduced. Thus, even when the reduced diameter part 8 is provided, it is sufficient to solve problems such as safety when the release side outer periphery of the nut is acute angle, etc. Since the release side end is often chamfered even in conventional nuts, the reduced diameter part 8 need not be chamfered or more.

Combination of Structures

Regarding the nut 1 of the present disclosure, though the combinations of the structures (shapes, dimensions, etc.) in the various embodiments described above are not specifically described, it is clear that they can be adopted in any combination. For example, by arbitrarily combining the shape and dimensions of the depression 7 of the nut 1, the shape and dimensions of the flange part 5, and the shape and dimensions of the release side additional rigidity part 6 as described as structures, and the requirements described as structures of particularly preferred embodiments, the features and effects of each embodiment can be realized in an additive or compound manner.

Nut Material and Strength

The material and strength of the nut are not particularly limited, but are specified in standards such as JIS, and the material and strength of the nut of the standards can be adopted in the nut 1 of the present disclosure. In particular, as nuts used in harsh environments in which the nut of the present disclosure is preferably used, six nut strength classes of 5, 6, 8, 9, 10, and 12, are set in the JIS (as of 2022), but the nut of the present disclosure is particularly useful in nuts with four strength classes, 8, 9, 10, and 12, three classes, 9, 10, and 12, two classes, 10 and 12, and one class, 12.

The specific material is not particularly limited as long as it satisfies the above strength classification in a preferred embodiment, but examples thereof include ordinary steel, quenched and tempered carbon steel (SCM435-H, SCM420-H, S45C-H, etc.), stainless steel and other alloy steels, high strength stainless steel (SUS630 (Fe-17Cr-4Ni-4Cu-0.2Nb)), etc. Examples of preferred materials include titanium alloys (Ti-6Al-4V, Ti-15Al-3Cr-3Sn, $Ti_3$(Nb, Ta, V)+(Zr, Hf)+O; superelastic low Young's modulus titanium alloys).

Nut Production

The nut 1 of the present disclosure can basically be the same as a conventionally known nuts except for the depression 7, and thus, can be produced by a method in which the outer shape of the nut (a nut without a hole, threads, or depression) is produced in a similar manner to conventionally known nuts, the hole and flange side end face are then cut to form the depression 7, and the threads are then created, or by a method in which a nut forging die for creating the depression is used when producing a nut using a forging die in a similar manner to conventionally known nuts.

Forming the depression 7 on the flange side end face of the nut by cutting can be easily performed using, for example, a lathe. In particular, in the nut 1 of the present disclosure, since the depression 7 is shallow and has a simple shape, the cutting process is also easy and damage to the cutting tool is the same as when there is no depression.

Producing a forging die for a nut having the depression of the nut 1 of the present disclosure can also be easily carried out by a conventional hot forging die production method or cold forging die production method, since the depression 7 is shallow and the shape is simple, and since the depression 7 is shallow and the shape is simple, production of the forging die is also easy.

When producing a nut of a preferred embodiment of the nut 1 of the present disclosure, for example, since the shape of the release side additional rigidity part 6 is simply an extension of the release side end of the nut body 2, and the shape and dimensions of the flange part 5 can be changed simply and slightly, they can be performed without substantial influence on the conventional production method. Regarding machine tools such as lathes and tools such as forging dies for producing the nuts of the preferred embodiments, since the changes in the shapes and dimensions are simple and slight, there is no risk of the tool life being shortened, and the production of the nut itself is easy.

The nut 1 of the present disclosure can be produced without making major changes to the production method of conventional nuts, with only minor changes to its shape and dimensions, and since the shape thereof is simple rather than complex, there is no need to worry approximately damage to tools during the processing process or damage to forging dies, etc., and it is possible to achieve productivity and tool life equivalent to that of conventional nuts.

Furthermore, though the nut 1 of the present disclosure can achieve the same productivity and tool life as conventional nuts, it can significantly reduce the load share of the first thread of the mating thread (by approximately 20 to 26%) compared to nuts that have been commercially produced and used conventionally, thereby significantly extending the fatigue life of the bolt/nut fastener in environments with large load fluctuations.

The relationship between the fatigue fracture life (number of cycles Nf) and the external load (stress amplitude $\sigma r$) can generally be expressed by the following empirical formula:

$$Nf \cdot (\sigma r)^b = C$$

where Nf: number of repeated loads until fatigue failure occurs
$\sigma r$: stress amplitude of load
b: Stress index (generally 3 to 5)
C: material constant

Thus, Nf can be increased by the third to fifth powers of $\sigma r$.

For example, when $\sigma r$ decreases by 20%, it becomes $0.8 \times 0.8 \times 0.8 \times 0.8 = 0.4096$ (4th power of 0.8), and if C is the same and the formula is transformed to $Nf = C/(\sigma r)^b$, Nf is expected to be approximately 2.4-fold, which is the reciprocal of 0.4096 (2.4414). In the above formula, when b=3rd power, it becomes 1.953-fold, and when $\sigma r$ decreases by $10\% \times b = 3rd$ power, it becomes $0.9^3 = 0.729$, and the reciprocal is 1.3717, so the life Hf is expected to be 1.37-fold.

Bolt/Nut Fastening Structure

According to the present disclosure, there is also provided a bolt/nut fastening structure 10, which is characterized in that it is a fastening structure that uses the above-described nut 1 and a bolt 11 corresponding to the nut 1 to fix an object to be fastened 12 to a base material 13. FIG. 8 shows a longitudinal cross-sectional view schematically showing this bolt/nut fastening structure 10. In FIG. 8, a preferred embodiment of the nut 1 having an release side additional rigidity part 6 together with a depression 7 is shown, but the release side additional rigidity part 6 is not indispensable in the present disclosure.

According to this fastening structure 10, even when used in harsh environments including at least one of vibration, temperature change, corrosive environments, etc., or for applications selected from the group consisting of automobiles, aircraft, space equipment, bridges, prime movers (motors, engines), wind power generators, construction machinery, civil engineering machinery, railway vehicles, cranes, ships, power generation equipment, power transmission equipment (steel towers), pipelines (flange connections), elevators (elevators, escalators), vacuum equipment, semiconductor production equipment, etc., the load distribution rate of the first meshing thread of the bolt/nut connection can be significantly reduced, despite the inexpensive nut 1, and the long-term life of the bolt/nut fastening structure can be significantly increased.

EXAMPLES

Preferred embodiments of the present disclosure will be described below with reference to Examples. It should be noted that the present disclosure is not limited to these Examples.

(Regarding FEM Analysis)

Since it is generally not possible to directly observe the force transmitted through a material, finite element analysis is useful as a method for predicting the state and flow of force within a material. In order to analyze the load distribution rate of each thread in a conventional bolt/nut fastening method, a simulation analysis of the fastening part was carried out using a CAE (Computer Added Engineering) method that utilizes the finite element method (FEM) to obtain the von Mises equivalent stress distribution of various nuts. The method of obtaining the von Mises equivalent stress distribution itself is known.

FEM analysis was carried out using a computer and analysis software (for example, a high-performance computer equipped with CAD software for drawing and software capable of analysis using the von Mises equivalent stress for analysis).

The tightening force, nut strength, Young's modulus, etc., used during tightening are the same as those of conventional products.

The attached longitudinal cross-section view of the nut shows only a specific longitudinal cross-section, but the FEM analysis takes into account the fact that the nut has a three-dimensional shape. For example, the shape (cross-sectional shape) of the nut body, and in particular, the gonal nut part, when viewed from the axial direction is not circular but includes angular portions, and because the threaded hole rotates in a spiral manner, the shape and position of the thread ridges and valleys in the longitudinal cross-section will differ depending on the direction in which the longitudinal cross-section including the axis is cut.

(Comparative Example 1)

For comparison with the following Examples, production of an M12 (thread pitch 1.25 mm) hexagonal nut was studied with reference to the description in Patent Literature 1 (Japanese Utility Model Publication No. 59-45320). Patent Literature 1 describes that the width of the notch is 1.3-fold the diameter of the bolt, and the depth of the notch is 1.5 to 3-fold the thread pitch in the case of fine threads.

Specifically, assuming a hexagonal nut conforming to JIS standards (M12 nut without flange part, thread pitch 1.25 mm, diagonal dimension 19.6 mm, two-face width 16.97 mm, material S45C-QT), the formation of an annular notch on the fastening side bearing surface of the hexagonal nut by cutting using a lathe was considered. Hexagonal nut A, in which a stress relaxation part (chamfering) was not formed, and hexagonal nut B, in which a stress relaxation part (chamfering radius 0.2 mm at the longitudinal cross-section) was formed, were set at the outer peripheral side end of the bearing surface of the hexagonal nut.

According to the FEM analysis, in model A, which does not have a stress relaxation part (chamfer) on the bearing surface, if the hardness of the object to be fastened is soft, nut A begins to sink into the object to be fastened halfway through fastening, becoming unable to rotate and therefore unusable as a nut.

In model B, the nut bearing surface thickness is only approximately 0.5 mm, but since the bearing surface is annular, it can rotate, and thus, the bolt and nut were fastened by rotating the bolt side. However, in model B, which has a small bearing surface area, the internal stress distribution analysis showed the maximum stress concentration between the outermost contact diameter of the bearing surface and the outermost circumference of the nut notch (rectangular space), and a black area with a diagonal width (high stress area) appeared. It is known that when there is a black area with this diagonal width in the stress distribution, buckling occurs along the diagonal line.

From these results, it was judged that neither nut A nor nut B can be expected to provide the reliable fastening ability required of an M12 fine thread. It is clear that the reason the required fastening ability cannot be expected is that the area of the bearing surface is reduced due to the notch that creates the internal rectangular space in the hexagonal nut, and the rigidity of the fastening side with the notch is greatly reduced. In addition to the problem of the reduced bearing surface area, since a space is provided on the bearing surface side of a normal hexagonal nut, the number of threads is reduced, and the normal 7 threads are reduced to 5 to 6 threads, and in this state, it is clear that the load distribution rate of the first meshing thread is higher than that of the seventh thread.

(Comparative Example 2)

The producibility of the M12 hexagonal nut (nut C) described in the Examples of Patent Literature 4 (WO 2019/131685; specification) (FIG. 1-1 of the same document) was examined based on the current (conventional) production process and production method.

First, a hot forging method was considered. A die for forming a convex space from a longitudinal cross-section without increasing the number of steps was devised. In this die, the longitudinal cross-section diagram shows a convex space, but in reality, the convex part is annular, and when the width a and depth b of the die that enters the innermost part of the convex space are compared, b is larger than a (a<b). Moreover, the direction in which the material metal is moved by forging is not uniform on the left and right sides with respect to the movement of the hot forging die (in this case, up and down movement in the axial direction), and it is necessary to greatly expand the material on the outer peripheral side, and since the convex part of the die (the part that creates the convex space) receives a reaction force in the radial direction, it was discovered that it is worn unevenly in the left and right directions. Furthermore, because the convex space is narrow, heat accumulates in the die in that part, cooling is not performed, and hardness decreases, whereby the durability of the die is significantly reduced, and abnormal wear occurs in the direction in which the depth of the convex space decreases. As a result, the part of the die for forming the convex space wears out faster than other parts, resulting in a smaller depth of the convex space in the nut that is formed. This leads to a decrease in the load sharing capacity of the first meshing thread, resulting in reduced quality (defective products).

Thus, forming the expanded nut legs of hexagonal nut C by hot forging alone is not only difficult, but even if it is not purely technically impossible, there are issues such as the above-described deterioration in product quality, rapid wear on the hot forging die, and the need for an extra inspection process. In particular, the time required for hot forging, which involves the steps of adding heated material, forging, and removing the material, cannot be maintained to a few seconds, and it is concluded that this method is unsuitable for commercial production of small mass-produced parts such as nuts.

Next, forming the convex space by cutting in the post-forging and heat treatment process was considered. Since the production method of nut C, which mainly involves cutting, also has the disadvantage that the convex space is narrow and deep, the cutting tool wears out quickly, in-process inspection of the product becomes cumbersome, automation is difficult, and the labor required for replacing the tool increases, increasing the production cost increases, whereby it was discovered that the shape of nut C is not suitable for commercial mass production.

Nut C is a nut corresponding to the nut in Patent Literature 4, but since the nut in Patent Literature 3 has a deeper convex space than that in Patent Literature 4, the problems discussed for nut C are even more serious, and it is clear that it is difficult to produce, or even if it is produced, it is unsuitable for commercial mass production. It is also clear that the nut of FIG. 2(a) of Patent Literature 3 has problems similar to nuts A and B and common with nut C, based on its shape.

(Example 1 and Reference Example 1)

Based on the shapes shown in the longitudinal cross-section diagrams of FIGS. 2-1 to 2-3, FEM analysis was performed on six types of nuts N1 to N6, which have different depression shapes and depths, as well as the original nut D1.

FIGS. 2-1 to 2-3 show nut N2, while FIGS. 3 and 4 show the shapes of nuts N1 and N5, and FIG. 5 shows the shape of nut D1. Nut D1 is a nut with a flange part similar to that of nut N2, but differs from nut N2 in that it does not have a depression or an release side additional rigidity part. In FIG. 5, M1 and M2 represent the radial direction dimension of the chamfer, Ha and Em represent the axial direction dimension of the chamfer, and angles $\alpha$ and $\delta$ represent the chamfer angle. The axial direction dimension Ha of the chamfer of nut D1 is approximately 0.2-fold (0.2P) the thread pitch. FIGS. 1(f) and 1(g) show photographs of a prototype of nut N5 as viewed from the flange part side, and show a flat circular bearing surface, a shallow circular depression on the inner side of the bearing surface, and a bolt hole with a screw groove on the inner side of the depression.

Nut D1 is a nut of the Reference Example designed to be a suitable standard for evaluating the effectiveness of nuts N1 to N6 under strict conditions. Nut D1 is not necessarily a nut known in the prior art, but it was used as a control (standard) for evaluating the nuts of the Examples of the present disclosure.

Though nuts N1 to N6 are Examples, they differ only in the shape and depth of the depression, and the depression depths (maximum values) of N1 to N6 are approximately 0.4 pitch (N1), approximately 0.5 pitch (N2), approximately 0.6 pitch, approximately 0.7 pitch (N4), approximately 0.9 pitch (N5), and approximately 1.1 pitch (N6).

The depressions of nuts N1 to N6 all have a radial direction dimension (radial direction dimension from the thread valley cylindrical surface to the boundary between the depression and the bearing surface) Lm of approximately 2.4 pitches on the threaded hole side of the bearing surface of the fastening side end of the flange part, and a flat portion extending in the radial direction at the end of the inner side of the depression. This inner side flat end portion of the depression has the depth Di of approximately 0.3 pitches from the bearing surface, and the radial direction dimension of 0.19 pitches from the thread valley cylindrical surfaces. The position of the deepest part D of the depressions of nuts N1 to N6 is at a position where the radial direction dimension Ldm from the thread valley cylindrical surface increases in order from approximately 1 pitch (N1) to approximately 2 pitches (N6).

Nuts N1 to N6 have an additional rigidity portion (axial direction dimension 0.8 pitch) on the release side, a reduced diameter part in which the radial direction dimension is reduced on the outer periphery of the release side end is a longitudinal cross-section arc shape, the axial direction dimension B is approximately 1.2 pitch, and the radial direction dimension Lr of the stress relaxation part of the flange part is approximately 1.0 pitch.

Nut D1 differs from N1 to N6 in that no depression is formed, that it does not have an release side additional rigidity part, and that the longitudinal cross-sectional curvature radius of the reduced diameter part of the release side end is 0.48 pitch.

Regarding nuts N1 to N6 and nut D1 designed in this manner, the FEM analysis using the above-described method can be performed to determine the load distribution rate for each thread, for example, for nuts N2 and D1, as shown in FIG. 6. In FIG. 6, the horizontal axis represents the thread number (first to eighth threads) from the fastening side, and the vertical axis represents the load distribution rate of the fastening force for each thread.

According to FIG. 6, the load distribution rate of the first engagement thread is the largest in nut N2, and thus, it is clear that the damage of the bolt-nut connection occurs mainly in the first engagement thread, which is consistent with the knowledge of the prior art. Comparing nut D1 of the Reference Example with nut N2 of the Examples, the load distribution rate of the first engagement thread is 34.3% in D1, but decreases to 26.6% in N2, a difference of 7.7 points, and the improvement rate (improvement rate) is 22.4%. This improvement rate is extremely remarkable, and is an astonishing value considering that the depression depth is only slightly less than 0.5 pitch. It is clear that the fatigue life of the bolt-nut connection structure is greatly improved from this remarkable decrease in the load distribution rate of the first engagement thread. The improvement in the fatigue life of the bolt-nut connection structure is approximated by the following empirical formula from the decrease in the load distribution rate of the first engagement thread and the improvement in the decrease rate.

$$\text{Empirical formula for fatigue life Nf } (\sigma r \text{ to the power of } b) = C$$

where Nf is the number of repeated loads until fatigue failure, $\sigma r$ is the stress amplitude of the load, b is the stress exponent (generally 3 to 5), and C is a material constant.)

Since the load sharing of the first peak is repeatedly applied as the "load stress amplitude", a decrease in the stress amplitude leads to an increase in Nf.

For example, even in applications where the fatigue life in harsh environments has traditionally been measured in decades, it is said that the life can be doubled if the load distribution rate on the threads is reduced by 10%. Although it depends on the type of environment, there is a high possibility that the fatigue life can be improved by more than two-fold if the number of repeated load inputs is increased.

In the same manner as the load distribution rate for each thread of nut N2 and nut D1 shown in FIG. 6, the reduction rate (improvement rate) of the load distribution rate of the first meshing thread for nuts N1 and N3 to N6 as compared to nut D1 was calculated and the results are shown in the graph in FIG. 7. In FIG. 7, the horizontal axis represents the magnitude of depression depth/thread pitch, and the vertical axis represents the load distribution rate of the first meshing thread.

According to FIG. 7, in the case of the nut structure of the present disclosure, as compared to the control example nut D1, the improvement rate of nut N1 is 21.1% for nut N1, and the improvement rate (22.4 to 25.9%) higher than that of nut N1 is obtained for all of nuts N2 to N6. Furthermore, the depth of depression increases from nut N1 to nut N6, but the improvement rate increases from nut N1 to nut N5, and the improvement rate is reversed for nut N6.

According to conventional knowledge, it was thought that the effect of reducing the load distribution rate of the first engagement thread by forming a notch or a convex space on the bearing surface side of the nut could be increased as the depth of the notch convex space was deeper (although there was an upper limit to the depth based on the dimensions and strength of the nut). However, in the nut of the present disclosure, even if the depression depth is extremely shallow, less than 1.5 pitches or 1.25 pitches or less, a surprisingly high reduction effect can be obtained, and moreover, in the structure of the nut of the present disclosure, it was discovered that the reduction effect based on the depression depth gradually decreases with increasing depth at approximately 1.0 pitch or more, which was a fact that was not expected at all in the past. Furthermore, in the present disclosure, even if the depression depth is 1.0 pitch or more and less than 1.5 pitches, the effect of reducing the load distribution rate of the first engagement thread can be sufficiently obtained, and thus, the depression depth range of the nut of the present disclosure is set to less than 1.5 pitches.

The process for producing the nut N2 with the shape shown in FIGS. 2-1 to 2-3 was assumed. First, a nut prototype with the outer diameter shown in FIGS. 2-1 to 2-3 was created, and a CNC lathe program was then created for the process of cutting the depression from the flange side bearing surface of the nut prototype using a lathe, inputting the conditions of the cutting tool to be used, and simulating it. After this, it is easy to drill a threaded hole in the center and create the threading. This lathe operation can be carried out simply by using an end mill or drill with a cutting edge of a simple shape, whereby the nut can be produced without difficulty. Furthermore, even if the number of nuts produced is increased, damage to the cutting tool, end mill, and drill is the same as when the nut prototype is made by lathe processing, and the wear is only minor and commercially acceptable.

Furthermore, the forging die (mold) for forging the outer shape of the nut shown in FIG. 2-1 to FIG. 2-3 was examined using CAD. This forging die (mold) has more movement of metal material as compared to the die for production nuts without depression, but it was confirmed that there is no problem with durability if the die thickness is increased to increase the space somewhat and the cooling performance is improved. It was also confirmed that the damage to the forging die (mold) was the same as that of the die for production nuts without depression.

(Example 2)

Nut N5-1 was designed and FEM analysis was performed in the same manner as nut N5, but nut N5-1 differs from nut N5 in that it does not have an release side additional rigidity part (the height of the nut is 0.8 pitches smaller) and the cross-sectional curvature radius of the arc of the release side reduced diameter part is 0.48 pitches.

The load distribution rate of the first engagement thread obtained was 26.3%, which is significantly smaller than that of nut D1, but the load distribution rate of the first engagement thread increased by 0.7 points compared to nut N5.

It has been shown that the release side additional rigidity part affects the load distribution rate of the first tooth of engagement.

(Example 3)

N5-2 was designed and FEM analysis was performed in the same manner as nut N5, but nut N5-2 differs from nut N5 in that the radial direction dimension Lr of the stress relaxation part of the flange part is 0.16 pitches larger than that of nut N5 (the radial direction dimension Rr of the bearing surface is 0.16 pitches smaller than that of nut N5).

The load distribution rate of the first engagement thread obtained was 26.2%, which is significantly smaller than that of nut D1, but the load distribution rate of the first engagement thread increased by 0.8 points compared to nut N5.

It has been shown that the radial direction dimension Lr or the size of the bearing surface of the stress relaxation part of the flange part affects the load distribution rate of the first thread peak.

DESCRIPTION OF REFERENCE SIGNS

| 1 | nut |
|---|---|
| 2 | nut body |
| 3 | threaded hole |
| 4 | gonal nut part |
| 5 | flange part |
| 6 | release side additional rigidity part |
| 7 | depression |
| 8 | reduced diameter part |
| 10 | bolt/nut fastening structure |
| 11 | bolt |
| 12 | object to be fastened |
| 13 | fastening base material |
| Rn | radial dimension of virtual inscribed cylindrical surface of outer circumference of gonal nut part |
| Rno | radial dimension of the virtual circumscribed cylindrical surface of outer circumference of gonal nut part |
| Dm | maximum depth of depression |
| Lm | radial direction dimension of depression |
| Ls | radial direction dimension of the bearing surface |
| Lr | radial direction dimension of the stress relaxation part of the flange part |
| Rfm | flange outermost perimeter part radial dimension |
| Hf | flange part shoulder height |
| Hfm | flange part maximum height |
| Ha | axial direction dimension of release side additional rigidity part (part with hole radius larger than thread valley radius) |
| Hc | axial direction dimension of the reduced diameter part |

**Claims**

1. A nut (1), comprising a nut body (2) and a threaded hole (3), wherein

the nut (1) has an axis, an axial direction (Z), and a radial direction (X) perpendicular to the axis,
in the radial direction (X) of the nut body (2), an axial side is referred to as the "inner side", and the side distant from the axis is referred to as the "outer side" or "outer peripheral side",
hereinafter, the dimension from the axis of the nut body (2) to a specific position in the radial direction (X) is defined as the "radial dimension", which is distinguished from the "radial direction dimension", which is the dimension between two specific points in the radial direction (X),
the threaded hole (3) has a thread valley radial dimension R0, which is the radial dimension of a thread valley cylindrical surface (3e) formed by connecting thread valleys (3b) of the threaded hole (3), and a thread pitch P,
the nut body (2) includes a gonal nut part (an angular nut part) (4) and a flange part (5) in the axial direction (Z), the flange part (5) side of the nut (1) is defined as the "fastening side" and the gonal nut part (4) side is the "release side",
the gonal nut part (4) has an outer perimeter inscribed cylindrical radial dimension Rn of the gonal nut part (4), which is the radial dimension of the cylindrical surface (4) inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),
the flange (5) part has an outer perimeter radial dimension that is larger than the outer perimeter circumscribed cylindrical radial dimension Rno,
the flange part (5) has a bearing surface (5s) consisting of a plane extending in a direction (X) perpendicular to the axis at the fastening side end,
the flange part (5) includes a depression (7) on the axial side of the bearing surface (5s), which is annular when viewed in the axial direction (Z) and which has a depth toward the release side from an extension surface (5e) of the bearing surface, and
the depression (7) has a maximum depth Dm from the extension surface (5e) of the bearing surface in the axial direction (Z) that is less than 1.5-fold the thread pitch P (Dm<1.5P), preferably 1.25-fold or less (Dm ≤1.25P), and more preferably 1.0-fold or less (Dm≤1.0P) or less than 1.0-fold (Dm<1.0P).

2. A nut (1), comprising a nut body (2) and a threaded hole (3), wherein

the nut (1) has an axis, an axial direction (Z), and a radial direction (X) perpendicular to the axis,
an axial side of the nut body (2) in the radial direction (X) is referred to as the "inner side", and the side distant from the axis is referred to as the "outer side" or "outer peripheral side",
hereinafter, the dimension from the axis of the nut body (2) to a specific position in the radial direction (X) is defined as the "radial dimension", which is distinguished from the "radial direction dimension", which is the dimension between two specific points in the radial direction (X),
the threaded hole (3) has a thread valley radial dimension R0, which is the radial dimension of a thread valley cylindrical surface (3e) formed by connecting thread valleys (3b) of the threaded hole (3), and a thread pitch P,
the nut body (2) includes a gonal nut part (4) and a flange part (5) in the axial direction (Z), the flange part (5) side of the nut (1) is defined as the "fastening side" and the gonal nut part (4) side is the "release side",
the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),
the flange part (5) has an outer perimeter radial dimension that is larger than the outer perimeter circumscribed cylindrical radial dimension Rno,
the flange part (5) has a bearing surface (5s) consisting of a plane extending in a direction (X) perpendicular to the axis at the fastening side end,
the flange part (5) includes a depression (7) on the axial side of the bearing surface (5s), which is annular when viewed in the axial direction (Z) and which has a depth toward the release side from an extension surface (5e) of the bearing surface,
an area Sm (=S3-S2) obtained by subtracting an area S2 of the axial side having an axial side end (5si) of the bearing surface as its outer edge from an area S3 of the axial side having the flange outermost perimeter part (5om) of the flange part (5) as its outer edge as viewed from the axial direction (Z) is 0.55-fold or more (S≥0.55Ss) of an area Ss (=Sn-S0) obtained by subtracting an area S0 of a circle having the radius of the thread valley radial dimension R0 from an area Sn of a circle having the radius of the outer perimeter inscribed cylindrical radial dimension Rn of the gonal nut part (4), and
in the depression (7), a maximum depth Dm in the axial direction (Z) from the extension surface (5e) of the bearing surface is less than 1.5-fold the thread pitch P (Dm<1.5P).

3. A nut (1), comprising a nut body (2) and a threaded hole (3), wherein

the nut (1) has an axis, an axial direction (Z), and a radial direction (X) perpendicular to the axis,
an axial side of the nut body (2) in the radial direction (X) is referred to as the "inner side", and the side distant from the axis is referred to as the "outer side" or "outer peripheral side",
hereinafter, the dimension from the axis of the nut body (2) to a specific position in the radial direction (X) is defined as the "radial dimension", which is distinguished from the "radial direction dimension", which is the dimension between two specific points in the radial direction (X),
the threaded hole (3) has a thread valley radial dimension R0, which is the radial dimension of a thread valley cylindrical surface (3e) formed by connecting thread valleys (3b) of the threaded hole (3), and a thread pitch P,
wherein the thread pitch P is a thread pitch based on the JIS standard for threads or the standard of each country or international organization corresponding to the JIS standard (hereinafter, JIS and the like are collectively referred to as "standards"),
the nut body (2) includes a gonal nut part (4) and a flange part (5) in the axial direction (Z), the flange part (5) side of the nut (1) is defined as the "fastening side" and the gonal nut part (4) side is the "release side",
the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),
the flange part (5) has an outer perimeter radial dimension that is larger than the outer perimeter circumscribed cylindrical radial dimension Rno,
the flange part has a bearing surface (5s) consisting of a plane extending in a direction (X) perpendicular to the axis at the fastening side end,
the flange part (5) includes a depression (7) on the axial side of the bearing surface (5s), which is annular when viewed in the axial direction (Z) and which has a depth toward the release side from an extension surface (5e) of the bearing surface, and

in the depression (7), a maximum depth Dm in the axial direction (Z) from the extension surface (5e) of the bearing surface is less than 1.5-fold the thread pitch P (Dm<1.5P).

4. A nut (1), comprising a nut body (2) and a threaded hole (3), wherein

the nut has an axis, an axial direction (Z), and a radial direction (X) perpendicular to the axis,

an axial side of the nut body (2) in the radial direction (X) is referred to as the "inner side", and the side distant from the axis is referred to as the "outer side" or "outer peripheral side",

hereinafter, the dimension from the axis of the nut body (2) to a specific position in the radial direction (X) is defined as the "radial dimension", which is distinguished from the "radial direction dimension", which is the dimension between two specific points in the radial direction (X),

the threaded hole (3) has a thread valley radial dimension R0, which is the radial dimension of a thread valley cylindrical surface (3e) formed by connecting thread valleys (3b) of the threaded hole (3), and a thread pitch P, wherein the thread pitch P is a thread pitch based on the JIS standard for threads or the standard of each country or international organization corresponding to the JIS standard (hereinafter, JIS and the like are collectively referred to as "standards"),

the nut body (2) includes a gonal nut part (4) and a flange part (5) in the axial direction (Z), the flange part (5) side of the nut (1) is defined as the "fastening side" and the gonal nut part (4) side is the "release side",

the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4),

the flange part (5) has an outer perimeter radial dimension that is larger than the outer perimeter circumscribed cylindrical radial dimension Rno,

the flange part (5) has a bearing surface (5s) consisting of a plane extending in a direction (X) perpendicular to the axis at the fastening side end,

the flange part (5) includes a depression (7) on the axial side of the bearing surface (5s), which is annular when viewed in the axial direction (Z) and which has a depth toward the release side from an extension surface (5e) of the bearing surface, and

in the depression (7), when the thread pitch P of the threaded hole (3) is a thread pitch of a fine thread as defined in the standards, a maximum depth Dm in the axial direction from the extension surface (5e) of the bearing surface is less than 1.5-fold the thread pitch P (Dm<1.5P), and when the thread pitch P of the threaded hole is a thread pitch of a coarse thread as defined in the standards, the maximum depth Dm in the axial direction (Z) from the extension surface (5e) of the bearing surface is less than 1.0-fold the thread pitch P (Dm<1.0P).

5. A nut (1), comprising a nut body (2) and a threaded hole (3), wherein

the nut has an axis, an axial direction (Z), and a radial direction (X) perpendicular to the axis,

an axial side of the nut body (2) in the radial direction (X) is referred to as the "inner side", and the side distant from the axis is referred to as the "outer side" or "outer peripheral side",

hereinafter, the dimension from the axis of the nut body (2) to a specific position in the radial direction (X) is defined as the "radial dimension", which is distinguished from the "radial direction dimension", which is the dimension between two specific points in the radial direction (X),

the threaded hole (3) has a thread valley radial dimension R0, which is the radial dimension of a thread valley cylindrical surface (3e) formed by connecting thread valleys (3b) of the threaded hole (3), a female thread valley diameter $\varphi$ in the diameter of the thread valley cylindrical surface (3e), and a thread pitch P,

wherein the thread pitch is defined as P (unit: mm), a valley diameter of female threading of the nut is defined as $\varphi$ (unit: mm), and the following relationships are satisfied:

when $0.5 < \varphi \le 1.3$, $P \le (1/20)\varphi + 0.17$,
when $1.3 < \varphi \le 2.3$, $P \le (0.12/0.8)\varphi + 0.07$,
when $2.3 < \varphi \le 6.5$, $P \le (0.6/4)\varphi + 0.02$,
when $6.5 < \varphi \le 12$, $P \le (0.55/4)\varphi - 0.07$,
when $12 < \varphi \le 41$, $P \le (2.55/29)\varphi + 0.48$,
when $41 < \varphi \le 125$, $P \le (2/85)\varphi + 3.06$,
when $125 < \varphi \le 320$, $P \le 7.80$

or

the relationships shown in the Table below are satisfied:

[Table]

| Female thread valley diameter φ | Range of P | Female thread valley diameter φ | Range of P | Female thread valley diameter φ | Range of P |
|---|---|---|---|---|---|
| φ≤1.3 | 0.24 or less | 4.2<φ≤4.7 | 0.73 or less | 23<φ≤29 | 2.80 or less |

| | | | | | |
|---|---|---|---|---|---|
| 1.3<φ≤1.5 | 0.28 or less | 4.7<φ≤5.5 | 0.78 or less | 29<φ≤35 | 3.30 or less |
| 1.5<φ≤1.9 | 0.33 or less | 5.5<φ≤7.5 | 0.98 or less | 35<φ≤40 | 3.80 or less |
| 1.9<φ≤2.1 | 0.38 or less | 7.5<φ≤9.5 | 1.20 or less | 41<φ≤45 | 4.30 or less |
| 2.1<φ≤2.7 | 0.43 or less | 9.5<φ≤11.5 | 1.40 or less | 45<φ≤55 | 4.80 or less |
| 2.7<φ≤3.2 | 0.48 or less | 11.5<φ≤13 | 1.70 or less | 55<φ≤62 | 5.30 or less |
| 3.2<φ≤3.7 | 0.58 or less | 13<φ≤17 | 1.90 or less | 62<φ≤122 | 5.80 or less |
| 3.7<φ≤4.2 | 0.68 or less | 17<φ≤23 | 2.40 or less | 122<φ≤310 | 7.80 or less |

the nut body (2) includes a gonal nut part (4) and a flange part (5) in the axial direction (Z), the flange part (5) side of the nut (1) is defined as the "fastening side" and the gonal nut part (4) side is the "release side", the gonal nut part (4) has an outer perimeter inscribed cylindrical radial dimension Rn of the gonal nut part (4), which is the radial dimension of the cylindrical surface inscribed on an outer perimeter surface of the gonal nut part (4), and an outer perimeter circumscribed cylindrical radial dimension Rno of the gonal nut part (4), which is the radial dimension of the cylindrical surface circumscribed on the outer perimeter surface of the gonal nut part (4), the flange part (5) has an outer perimeter radial dimension that is larger than the outer perimeter circumscribed cylindrical radial dimension Rno, the flange part (5) has a bearing surface (5s) consisting of a plane extending in a direction (X) perpendicular to the axis at the fastening side end,

the flange part (5) includes a depression (7) on the axial side of the bearing surface (5s), which is annular when viewed in the axial direction (Z) and which has a depth toward the release side from an extension surface (5e) of the bearing surface, and

in the depression, a maximum depth Dm in the axial direction (Z) from the extension surface (5e) of the bearing surface is less than 1.5-fold the thread pitch P (Dm<1.5P).

6. The nut (1) according to Claim 1, wherein in the depression (7), the maximum depth Dm in the axial direction from the extension surface (5e) of the bearing surface is less than 1.0-fold the thread pitch P (Dm<1.0P).

7. The nut (1) according to any one of Claims 1 to 6, wherein in a longitudinal cross-section including the axis of the nut (1) (hereinafter referred to simply as "nut longitudinal cross-section"), the nut body (2) has an release side additional rigidity part at the release side end, and the release side additional rigidity part is a part in which a radial dimension R1 of the radial direction inner side surface is larger than a thread valley radial dimension R0, and an axial direction dimension Ha of the release side additional rigidity part is 0.5-fold or more and 2-fold or less the thread pitch P (0.5P ≤2Ha≤2P≥).

8. The nut according to any one of Claims 1 to 6, wherein in the depression (7), a depth Di in the axial direction from the extension surface (5e) of the bearing surface at the axial side end (7i) of the depression (7) is smaller than the maximum depth Dm the depression (7) (Di<Dm).

9. The nut (1) according to any one of Claims 1 to 6, wherein in the flange part (5), a dimensional difference Lfd=(Rfm-Rn) between a maximum radial dimension Rfm of the flange part (5) and an outer perimeter inscribed cylindrical radial dimension Rn of the gonal nut part (4) is 0.4-fold or more the thread pitch P (Lfd≥0.4Ln) relative to the radial direction dimension Ln from the thread valley cylindrical surface (3e) to the outer perimeter inscribed cylindrical surface of the gonal nut part (4).

10. The nut (1) according to any one of Claims 1 to 6, wherein in the flange part (5), an axial height Hfm from the bearing surface (5s) to a boundary (5fm) between the flange part (5) and the gonal nut part (4) is 0.2-fold or more the full length Hz of the nut (1) which is the height of the nut (1) in the axial direction (0.2Hz≤Hfm).

11. The nut according to any one of Claims 1 to 6, wherein in the nut longitudinal cross-section, the flange part (5) includes a flange outermost perimeter part (5om), which is a portion of the flange part (5) having a radial dimension of a maximum radius Rfm, and an inclined part (5c) connecting the flange outermost perimeter part (5om) and the gonal nut part (4)), and
the flange outermost perimeter part (5om) has a height Hf in the axial direction from the extension surface (5e) of the bearing surface at the boundary (5m) between the flange outermost perimeter part (5om) and the inclined part (5c) which is greater than the maximum depth Dm of the depression (7) (Hf>Dm).

12. The nut (1) according to any one of Claims 1 to 6, wherein a radial direction dimension Lm from the thread valley cylindrical surface (3e) to the outer side end (7o) of the depression (7) is greater than 1.0-fold (1.0P<Lm) the thread pitch P, the radial direction dimension Lm is smaller than the radial direction dimension Ln from the thread valley cylindrical surface (3e) to the outer perimeter inscribed cylindrical surface of the gonal nut part (4) (Lm<Ln).

13. The nut (1) according to Claim 12, wherein the depression (7) has a portion having a maximum depth Dm, the portion having the maximum depth Dm is located at a radial direction dimension Ldm from the thread valley cylindrical surface (3e), and the radial direction dimension Ldm is greater than two-fifths of the radial direction dimension Lm relative to the radial direction dimension Lm from the thread valley cylindrical surface (3e) to the outer side end (7o) of the depression (7).

14. The nut (1) according to Claim 13, wherein in the nut longitudinal cross-section, the depression (7) includes a stress relaxation curve part from the boundary (7o) between the depression (7) and the bearing surface (5s) toward the axial side end (7i) of the depression (7), which includes the portion of the maximum depth Dm, and optionally includes a straight-line part, and in particular a straight-line part (7il) extending substantially in the radial direction (X), and/or a chamfered part on the axial side of the stress relaxation curve part.

15. The nut (1) according to Claim 13, wherein in the nut longitudinal cross-section, the depression (7) includes a first straight-line part extending from the boundary between the depression (7) and the bearing surface (5s), a stress relaxation curve part extending from the end of the first straight-line part to the inner side in the radial direction and having the portion of the maximum depth Dm, and optionally a second straight-line part (7il) extending in the radial direction to the axial side end (7i) of the depression (7).

16. The nut (1) according to any one of Claims 1 to 6, wherein in the nut longitudinal cross-section, the radial dimension Rr of the inner side end (5si) of the bearing surface is smaller than the outer perimeter inscribed cylindrical radial dimension Rn of the gonal nut part (4) (Rr<Rn).

17. The nut (1) according to any one of Claims 1 to 6, wherein the radial direction dimension Ls from the inner side end (5si) to the outer side end (5so) of the bearing surface (5s) is 0.4-fold or more (Ls≥0.4Ln) the radial direction dimension Ln relative to the radial direction dimension Ln from the thread valley cylindrical surface (3e) to the outer perimeter inscribed cylindrical surface of the gonal nut part (4).

18. The nut (1) according to any one of Claims 1 and 3 to 6, wherein an area Sm (=S3-S2) obtained by subtracting an area S2 of a circle having a radius which is the axial side end (5si) of the bearing surface from an area S3 of a circle having radius which is the radial dimension Rfm of the flange outermost perimeter part (5om) of the flange part (5) when viewed from the axial direction (Z), is 0.55-fold or more (S≥0.55Ss) relative to the area Ss (=Sn-S0) obtained by subtracting an area S0 of a circle having the radius of the thread valley (3b) radial dimension R0 from an area Sn of a circle having the radius of the outer perimeter inscribed cylindrical radial dimension Rn of the gonal nut part (4).

19. The nut (1) according to any one of Claims 1 and 3 to 6, wherein the area S of the bearing surface (5s) is 0.55-fold or more (S≥0.55Ss) relative to the area Ss (=Sn-S0) obtained by subtracting an area S0 of a circle having the radius of the thread valley (3b) radial dimension R0 from an area Sn of a circle having the radius of the outer perimeter inscribed cylindrical radial dimension Rn of the gonal nut part (4).

20. The nut (1) according to Claim 11, wherein the radial direction dimension Lr=(Rfm-Rsm) of the stress relaxation part (5r) of the flange part (5) is 0.2-fold or more (Lr≥0.2Ln) the radial direction dimension Ln relative to the radial direction dimension Ln from the thread valley cylindrical surface (3e) to the outer perimeter inscribed cylindrical surface of the gonal nut part (4).

21. The nut (1) according to Claim 11, wherein in the nut longitudinal cross-section, the inclined part (5c) of the flange part (5) has an angle θ in the range of 15° to 60° (15°≤θ≤60°) relative to the radial direction.

22. The nut (1) according to any one of Claims 1 to 6, wherein the nut body has a reduced diameter part at the release side end, in which a radial dimension R3 of the radial direction outer side surface is smaller than the outer perimeter inscribed cylindrical radial dimension Rn of the gonal nut part (4) (R3<Rn), and the axial direction dimension Hc of the reduced diameter part is larger than the axial direction dimension Ha of the release side additional rigidity part.

23. A bolt/nut fastening structure, which is a fastening structure for fastening an object to be fastened to a base member using the nut (1) according to any one of Claims 1 to 22 and a bolt corresponding to the nut (1).

24. The bolt/nut fastening structure according to Claim 23, wherein the fastening structure is used in an environment including at least one of vibration, temperature change, pressure change, and corrosive environment.

25. The bolt/nut fastening structure according to Claim 23 or 24, which is used for an application selected from the group consisting of automobiles, aircraft, space equipment, bridges, prime movers (motors, engines), wind power generators, construction machinery, civil engineering machinery, mining machinery, railway vehicles, cranes, ships, power generation equipment, power transmission equipment (steel towers), pipelines (flange connections), elevators (elevators, escalators), vacuum equipment, semiconductor production equipment, casting and forging/iron-making machinery, machine tools, and steel buildings.

# Fig. 1(a)

# Fig. 1(b)

# Fig. 1(c)

# Fig. 1(d)

# Fig. 1(e)

# Fig. 1(f)

# Fig. 1(g)

Fig. 2-1

Fig. 2-2

Fig. 2-3

# Fig. 3

Dm

7dm

# Fig. 4

# Fig.5

EP 4 692 574 A1

# Fig. 6

THREAD LOAD DISTRIBUTION RATE COMPARISON BETWEEN "MODEL N2" AND "MODEL D"

Fig. 7

# Fig. 8

## INTERNATIONAL SEARCH REPORT

| International application No. |
|---|
| **PCT/JP2023/040631** |

| A. | CLASSIFICATION OF SUBJECT MATTER |
|---|---|

*F16B 37/00*(2006.01)i
FI: F16B37/00 E

According to International Patent Classification (IPC) or to both national classification and IPC

| B. | FIELDS SEARCHED |
|---|---|

Minimum documentation searched (classification system followed by classification symbols)

F16B37/00; F16B29/284

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 5927921 A (SPS TECHNOLOGIES, INC.) 27 July 1999 (1999-07-27) column 5, line 15 to column 8, line 3, fig. 2, 6 | 1, 3-6, 8, 11, 21, 23-25 |
| A | | 2, 7, 9-10, 12-20, 22 |
| Y | Microfilm of the specification and drawings annexed to the request of Japanese Utility Model Application No. 142522/1982 (Laid-open No. 45320/1984) (NIPPON STEEL CORP.) 26 March 1984 (1984-03-26), p. 3, line 13 to p. 5, line 6, fig. 2 | 1, 3-6, 8, 11, 21, 23-25 |
| A | | 2, 7, 9-10, 12-20, 22 |
| X | JP 2004-116769 A (MEIDOH CO., LTD.) 15 April 2004 (2004-04-15) paragraphs [0005]-[0008], fig. 9, 10 | 1, 3-6, 9, 11, 17, 20-21, 23-25 |
| A | | 2, 7-8, 10, 12-16, 18-19, 22 |
| X | JP 2014-202226 A (SUMITOMO ELECTRIC INDUSTRIES, LTD.) 27 October 2014 (2014-10-27) paragraphs [0026]-[0028], fig. 5 | 1, 3-6, 23-25 |
| A | | 2, 7-22 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/040631**

| Patent document cited in search report | | | Publication date (day/month/year) | Patent family member(s) | Publication date (day/month/year) |
|---|---|---|---|---|---|
| US | 5927921 | A | 27 July 1999 | (Family: none) | |
| JP | 59-45320 | U1 | 26 March 1984 | (Family: none) | |
| JP | 2004-116769 | A | 15 April 2004 | (Family: none) | |
| JP | 2014-202226 | A | 27 October 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57142522 U
- JP 59045320 U
- JP 57177922 A
- US 20160123161
- WO 2019131685 A
- US 5927921 A
- JP 61037004 U